(19) Europäisches Patentamt / European Patent Office / Office européen des brevets

(11) **EP 2 565 670 B1**

(12) **FASCICULE DE BREVET EUROPEEN**

(45) Date de publication et mention
de la délivrance du brevet:
**25.05.2016 Bulletin 2016/21**

(51) Int Cl.:
**G01S 13/00** *(2006.01)* **G01S 13/66** *(2006.01)*
**G01S 13/72** *(2006.01)* **G01S 13/87** *(2006.01)*

(21) Numéro de dépôt: **12182535.0**

(22) Date de dépôt: **31.08.2012**

(54) **Procede pour initialiser des pistes cartesiennes a partir de mesures bistatiques realisees par un ou plusieurs recepteurs d'un systeme radar multistatique**

Verfahren zum Initialisieren von kartesischen Bahnen auf der Grundlage von bistatischen Messungen, die von einem oder mehreren Empfängern eines multistatischen Radarsystems ausgeführt werden

Method for initialising Cartesian tracks according to bistatic measurements taken by one or more receivers of a multistatic radar system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2011 FR 1102670**

(43) Date de publication de la demande:
**06.03.2013 Bulletin 2013/10**

(73) Titulaire: **Thales**
**92200 Neuilly Sur Seine (FR)**

(72) Inventeurs:
• **Millet, Nicolas**
**91140 Villebon sur Yvette (FR)**
• **Allam, Sébastien**
**92160 Antony (FR)**
• **Klein, Mathieu**
**91190 Gif sur Yvette (FR)**
• **Malherbe, Thierry**
**91470 Limours (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 196 821 WO-A1-2009/047546**
**FR-A1- 2 933 775**

**Description**

L'invention concerne le domaine général du pistage dans le cadre des radars multistatiques. Elle concerne plus particulièrement le pistage multi-cibles réalisé à partir de systèmes multistatiques passifs.

L'exploitation d'un système radar passif comportant une pluralité d'émetteurs et/ou de récepteurs comporte un certain nombre de difficultés. En effet chaque couple émetteur-récepteur permet de constituer une base bistatique à partir de laquelle il est possible de réaliser, de différentes manières simples et connues, la détection et le pistage bistatiques d'objets évoluant dans l'espace couvert par cette base.

Cependant, lorsque l'on souhaite connaître la situation aérienne globale de la zone couverte par le système radar, il est nécessaire d'exploiter de manière conjointe les informations délivrées par les différentes bases bistatiques, généralement exploitées sous forme de pistes élémentaires, de façon à fusionner ces informations pour constituer des pistes globales ou pistes fusionnées.

Une exploitation conjointe des informations produites par les différentes bases bistatiques consiste en pratique à former et à entretenir des pistes cartésiennes globales en associant les informations de détection, les plots bistatiques, produites par les différentes bases bistatiques composant le système de détection considéré, pour former et entretenir des pistes cartésiennes.

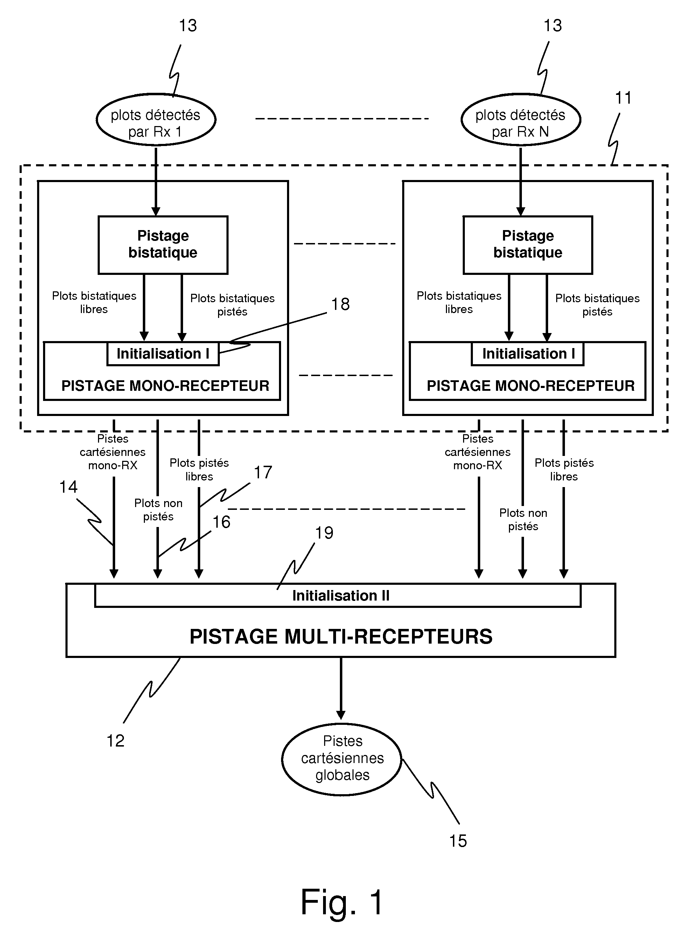

Le document de la demande de brevet français déposé par la demanderesse le 01/09/2009, sous le numéro 0904144, décrit un procédé permettant une telle exploitation conjointe. Ce procédé est illustré par la figure 1. Le procédé décrit permet de former des pistes cartésiennes à partir de plots bistatiques produits par des bases bistatiques distinctes, dans le cadre d'un système de détection comportant plusieurs récepteurs, deux bases bistatiques pouvant alors être formées par le même récepteur ou par des récepteurs différents.

Comme l'illustre la figure 1 et comme le mentionne le texte de la demande de brevet mentionnée précédemment, la formation et l'entretien de ces pistes cartésiennes passe naturellement par une ou plusieurs étapes d'initialisation. Diverses méthodes connues peuvent être utilisées pour réaliser l'initialisation de pistes cartésiennes à partir de plots bistatiques produit par les différentes bases bistatiques, formées à partir de récepteurs différents.

Ces méthodes sont généralement intimement liées en ce qui concerne leur principe à la structure du système considéré, et à la façon dont les plots bistatiques produits par les différentes bases bistatiques sont associés.

Cependant, quelle que soit la méthode utilisée l'initialisation de pistes cartésiennes se heurte à la difficulté que constitue la prise en compte d'un nombre très important de plots bistatiques disponibles à chaque instant pour tenter d'initialiser des pistes.

Il est également connu dans l'art antérieur, notamment par la demande de brevet FR2 933 775, un procédé de pistage pour système radars multistatiques.

La demande de brevet internationale WO 2009/047 546 enseigne un procédé et un système pour localiser des objets dans une région présentant un niveau élevé de sensibilité à des trajets multiples

La demande de brevet européenne EP 2 196 821 enseigne un procédé de filtrage cinématique temporel multidimensionnel de plots radar, de tour d'antenne à tour d'antenne.

Un but de l'invention est de proposer une solution permettant l'initialisation de pistes cartésiennes, solution adaptée au fonctionnement d'un système de détection multistatique passif comportant plusieurs récepteurs. Autrement dit un but de l'invention est de permettre une exploitation optimale des plots bistatiques produits par les différentes bases bistatiques constituant le système, que ces plots soient produits par des bases bistatiques formées par un même récepteur ou par des bases bistatiques formées des récepteurs différents, pour réaliser l'initialisation de pistes cartésiennes. Par exploitation optimale on entend une exploitation permettant d'éviter d'initialiser une piste à partir de chaque plot bistatique formé.

A cet effet l'invention a pour objet un procédé pour réaliser l'association de plots bistatiques correspondant à une même cible détectée par un système radar multistatique comportant une pluralité d'émetteurs et de récepteurs distants les uns des autres, un couple (émetteur, récepteur) formant une base bistatique du système, chaque plot bistatique $P_i$ correspondant à l'écho provenant du signal émis par un émetteur $Tx_j$ et reçu par un récepteur $E_k$ et étant caractérisé par l'émetteur $Tx_j$ ayant émis le signal dont il est l'écho. Les plots bistatiques formés étant associés aux différents émetteurs du système pour former un ensemble de couples (plot, émetteur), le procédé selon l'invention comporte:

- un premier module de formation de triplets de couples $(Pi, Tx_j)$, ces triplets, regroupant des couples (plot, émetteur) qui présentent une compatibilité de distance et de vitesse;
- un second module de formation de n-uplets de couples $(Pi, Tx_j)$, ces n-uplets regroupant des triplets formés à l'étape précédente répondant à des critères de regroupement donnés qui caractérisent la vraisemblance de l'attribution des différents triplets à une même cible;

Les n-uplets ainsi constitués formant des paquets de plots qui définissent une même cible.

Selon un mode particulier de mise en oeuvre du procédé selon l'invention, la première étape de formation de triplets de couples (plot, émetteur) est une étape itérative qui considère à chaque itération trois couples (plot, émetteur), un premier couple $(P_1, Tx_1)$, un second couple $(P_2, Tx_2)$ et un troisième couple $(P_{réf}, Tx_{réf})$ pris comme un couple de référence et qui leur applique une opération d'association qui teste la possibilité d'associer le premier couple $(P_1, Tx_1)$ et le second couple $(P_2, Tx_2)$ au couple de référence $(P_{réf}, Tx_{réf})$, un couple (plot, émetteur) étant associable au couple de référence si les caractéristiques de la cible correspondant au plot considéré sont compatibles des caractéristiques de la cible correspondant au plot formant le couple de référence; trois couples $(P_{réf}, Tx_{réf})$, $(P_1, Tx_1)$ et $(P_2, Tx_2)$, pour lesquels le test d'association est réussi formant un triplet de couples.

Selon une variante de ce mode de mise en oeuvre, la première étape de formation de triplets de couples (plot, émetteur) comporte elle-même les opérations suivantes:

- un premier test d'association pour déterminer si les couples $(P_{réf}, Tx_{réf})$ et $(P_1, Tx_1)$ sont associables;
- un deuxième test d'association pour déterminer si les couples $(P_{réf}, Tx_{réf})$ et $(P_2, Tx_2)$ sont associables;
- un troisième test de compatibilité des couples $(P_1, Tx_1)$ et $(P_2, Tx_2)$
- un quatrième test de compatibilités des distances bistatiques des plots
- un cinquième test de test de la vraisemblance de la vitesse cartésienne de la cible correspondant aux plots associés;
- une sixième opération de mémorisation des triplets formés de couples $(P_1, Tx_1)$ et $(P_2, Tx_2)$ ayant réussi tous les tests;

le test d'association mis en oeuvre lors du premier test étant identique à celui mis en oeuvre lors du second test.

Selon une forme particulière de cette variante de mise en oeuvre, le test d'association mis en oeuvre lors du premier test consiste, dans le cas où les plots $P_1$ et $P_{réf}$ sélectionnés ont un même récepteur Rx pour origine, à mettre en oeuvre les quatre tests indépendants suivants:

- un premier test (test 1) consistant à déterminer si les vitesses bistatiques $Vb_k(P_1)$ et $Vb_k(P_{réf})$ des plots $P_1$ et $P_{réf}$ peuvent correspondre à une même vitesse de cible, le premier test étant négatif si l'on a:

$$\left| Vb_k(P_{réf}) - Vb_k(P_1) \right| > 2.V_{max}$$

Où $V_{max}$ représente la vitesse maximale des cibles que l'on cherche à détecter;

- Un deuxième test (test 2) consistant à déterminer si les valeurs des azimuts associés aux plots $P_1$ et $P_{réf}$ peuvent correspondre à une même cible, compte tenu des précisions $\sigma_{\theta k}(P_1)$ et $\sigma_{\theta k}(P_{réf})$ des mesures d'azimuts réalisées; le deuxième test étant négatif si l'on a:

$$\left| \theta_k(P_{réf}) - \theta_k(P_1) \right| > 3.\sqrt{\sigma_{\theta_k}^2(P_{réf}) + \sigma_{\theta_k}^2(P_1)} \; ;$$

- Un troisième test (test 3) consistant à déterminer si les ellipsoïdes correspondant aux distances bistatiques des plots $P_1$ et $P_{réf}$ présentent des intersections, le troisième test étant négatif si l'on a:

$$\left( Db_k(P_{réf}) - Db_k(P_1) \right)^2 - \left\| \vec{x}_{Txréf} - \vec{x}_{Tx1} \right\|^2 > 0 \, ,$$

où

$$\vec{x}_{Tx1} = \begin{bmatrix} x_{Tx1} & y_{Tx1} & z_{Tx1} \end{bmatrix}^{\mathsf{T}} \qquad et \qquad \vec{x}_{Txréf} = \begin{bmatrix} x_{Txréf} & y_{Txréf} & z_{Txréf} \end{bmatrix}^{\mathsf{T}}$$

correspondent ici respectivement à la position cartésienne de l'émetteur $Tx_1$ associé à $P_1$ et à la position cartésienne de l'émetteur $Tx_{réf}$ associé à $P_{réf}$;

Un Quatrième test (test 4) consistant à déterminer si les intersections des ellipsoïdes construites à partir des distances bistatiques caractérisant les plots $P_1$ et $P_{réf}$, sont compatibles des mesures d'azimuts relatives à ces plots le quatrième test étant négatif si l'on, a:

$$\left[\cos \varphi - 3.\sigma_{\cos\varphi}, \cos\overline{\varphi} + 3.\sigma_{\cos\varphi}\right] \cap \left[0,1\right] \neq \varnothing,$$

où $\varphi$ correspond au site selon lequel la cible potentielle correspondant aux plots considérés peut être observée et $\sigma_{\cos\varphi}$ l'incertitude affectant la détermination de $\cos\varphi$;

le test d'association étant positif si les résultats des quatre tests sont positifs.

Selon une forme particulière de cette forme particulière, le test d'association mis en oeuvre lors du second test consiste, dans le cas où les plots $P_2$ et $P_{réf}$ sélectionnés ont un même récepteur Rx pour origine, à mettre en oeuvre, sur les plots $P_2$ et $P_{réf}$, les quatre tests indépendants mis en oeuvre lors du premier test.

Selon une autre forme particulière de la variante de mise en oeuvre décrite précédemment, le test d'association mis en oeuvre lors du premier test consiste, dans le cas où les plots $P_1$ et $P_{réf}$ sélectionnés ont pour origine des récepteurs $Rx_1$ et $Rx_{ref}$ distincts, à mettre en oeuvre consécutivement les quatre tests suivants:

- un premier test (test A) consistant à déterminer s'il est possible de définir, dans la limite de portée du système de détection considéré, une intersection des directions des azimuts des observations correspondant aux plots $P_1$ et $P_{réf}$; et, dans l'affirmative, à calculer cette intersection, en prenant en compte les incertitudes des mesures des azimuts de sorte que l'on définit une aire d'intersection;
- un deuxième test (test B) consistant, si le test A est positif, à déterminer si les deux sphères contenant les ellipsoïdes définis par les distances bistatiques des plots $P_1$ et $P_{réf}$ présentent une intersection;
- un troisième test (test C) consistant, si le test B est positif, à déterminer si les deux ellipsoïdes définis par les distances bistatiques des plots $P_1$ et $P_{réf}$ présentent une intersection.
- un quatrième test (test D) consistant, si le test C est positif, à déterminer si les mesures des distances bistatiques associées aux plots $P_1$ et $P_{réf}$ sont compatible de la zone d'intersection des directions des azimuts des observations correspondant aux plots $P_1$ et $P_{réf}$ déterminée lors du test A;

le test d'association étant positif si les résultats des quatre tests sont positifs.

Selon une autre forme particulière de cette forme particulière de mise en oeuvre, le test d'association mis en oeuvre lors du second test consiste, dans le cas où les plots $P_2$ et $P_{réf}$ sélectionnés ont pour origine des récepteurs $Rx_2$ et $Rx_{ref}$ distincts, à mettre en oeuvre consécutivement, sur les plots $P_2$ et $P_{réf}$, les quatre tests mis en oeuvre lors du premier test (41).

Selon une autre forme particulière de mise en oeuvre, le troisième test (test C) est réalisé par la méthode du multiplicateur de Lagrange appliquée aux deux ellipsoïdes considérés.

Selon une autre forme particulière de la variante de mise en oeuvre décrite précédemment, dans le cas où les plots $P_1$ et $P_2$ sélectionnés ont un même récepteur Rx pour origine, le troisième test de compatibilité des couples ($P_1$, $Tx_1$) et ($P_2$, $Tx_2$) est réalisé en mettant en oeuvre, sur les plots $P_1$ et $P_2$, des tests analogues à ceux mis en oeuvre lors du premier test (41) dans le cas où les plots $P_1$ et $P_{réf}$ sélectionnés ont un même récepteur pour origine.

Selon une autre forme particulière de la variante de mise en oeuvre décrite précédemment, dans le cas où les plots $P_1$ et $P_2$ sélectionnés ont pour origine des récepteurs $Rx_1$ et $Rx_2$ distincts, le troisième test de compatibilité des couples ($P_1$, $Tx_1$) et ($P_2$, $Tx_2$) est réalisé en mettant en oeuvre, sur les plots $P_1$ et $P_2$, des tests analogues à ceux mis en oeuvre lors du premier test dans le cas où les plots $P_1$ et $P_{réf}$ sélectionnés ont pour origine des récepteurs distincts.

Selon un mode particulier de mise en oeuvre du procédé selon l'invention, le second module de formation de n-uplets de couples (plot, émetteur) comporte les étapes suivantes:,

- une première étape de formation de n-uplets par analyse des triplets validés formés à partir d'un même couple de référence ($P_{éf}$, $Tx_{réf}$), l'analyse consistant à déterminer, en comparant tous les triplets formés, les couples ($P_i$, $Tx_j$) pour lesquels les propriétés suivantes sont vérifiées pour tous les triplets simultanément:
- le plot $P_i$ est toujours associé à un même émetteur $Tx_j$,
- l'émetteur $Tx_j$ est toujours associé à un même plot $P_i$;
  les couples (plot, émetteur) vérifiant ces deux propriétés étant associés dans un même ensemble appelé n-uplet
- une deuxième étape de filtrage, appliquée aux n-uplets formés lors de la première étape en fonction du nombre et de la nature des couples ($P_i$, $Tx_j$) contenus dans ces n-uplets; les n-uplets formés comportant moins de trois couples ou les n-uplets ne comprenant pas le couple de référence ($P_{éf}$, $Tx_{réf}$) étant éliminés;
- une troisième étape ayant pour objet, pour chaque n-uplet non éliminé par la deuxième étape, de vérifier la cohérence du n-uplet, la vérification de cohérence consistant à déterminer, en utilisant les mesures de distance bistatique, de vitesse bistatique et d'azimut réalisées sur les observations radar correspondant aux plots formant le n-uplet, si les plots formant les couples du n-uplet correspondent de manière vraisemblable à une même cible;

- une quatrième étape consistant à mémoriser les n-uplets ayant passé les étapes précédentes avec succès; les plots formant ces n-uplets constituant des paquets ou groupes de plots destinés à l'initialisation de pistes cartésiennes.

Selon une variante de ce mode de mise en oeuvre, durant la troisième étape, on calcule d'abord la position cartésienne et la vitesse de la cible correspondant aux plots formant le n-uplet, puis on réalise la transposition des paramètres cartésiens de la cible ainsi déterminée en paramètre bistatiques relatifs aux différentes bases bistatiques ayant produit les plots considérés, puis encore à comparer les paramètres bistatiques ainsi déterminés à ceux des plots considérés.

L'invention a également pour objet un procédé d'initialisation de pistes cartésiennes à partir de plots bistatiques correspondant à une même cible détectée par un système radar multistatique comportant une pluralité d'émetteurs et de récepteurs distants les uns des autres, un couple (émetteur, récepteur) formant une base bistatique du système, chaque plot bistatique $P_i$ correspondant à l'écho émis par un récepteur $Tx_j$ et reçu, après réflexion sur une cible, par un récepteur $E_k$ et étant caractérisé par l'émetteur $Tx_j$ ayant émis le signal dont il est l'écho. Le procédé selon l'invention comporte:

- une étape préliminaire mettant en oeuvre le procédé d'association de plots selon l'invention, cette étape permettant de déterminer un n-uplet de plots susceptible de correspondre à une même piste;
- une étape d'initialisation de pistes proprement dite, consistant à déterminer, à partir des paramètres des plots formant le n-uplet considéré, les paramètres de la cible correspondante.

Selon un mode de mise en oeuvre particulier de ce procédé l'étape d'initialisation de piste comporte les sous-étapes suivantes:

- une première sous-étape durant laquelle on réalise une première estimation grossière de la position de la cible, cette première estimation étant réalisée par mise en oeuvre de l'algorithme du gradient;
- une deuxième sous-étape durant laquelle on réalise un calcul d'intersection exhaustif permettant de déterminer, à partir des mesures des distances bistatiques des plots considérés et de la précision de ces distances, ainsi que des positions du récepteur et des émetteurs considérés, la position de la cible ainsi qu'une estimation de la matrice de covariance associée à cette position.
- d'une troisième sous-étape durant laquelle on calcule la vitesse de la cible;
- d'une quatrième sous-étape durant laquelle on estime la matrice de covariance initiale C de l'état de la cible à partir des bornes de Cramer Rao déterminées grâce aux précisions des mesures en distance bistatique, vitesse bistatique et azimut.
- d'une cinquième sous-étape durant laquelle la nouvelle piste est construite en associant tous les attributs qui la caractérisent.

Selon un mode de mise en oeuvre particulier de ce procédé, celui-ci comporte en outre une étape complémentaire, préalable à l'étape préliminaire, consistant à réaliser une première association en deux dimensions des plots bistatiques formés par le système, l'analyse de la compatibilité des plots considérés étant réalisée en ne tenant pas compte de l'altitude des observations correspondant à ces plots, ni des altitudes relatives des émetteurs et des récepteurs constituant le système; les plots bistatiques associés au cours de cette étape complémentaire étant directement transmis à l'étape d'initialisation de pistes, l'étape préliminaire réalisant l'association en trois dimensions des seuls plots non associés par l'étape d'association en deux dimensions.

L'invention a également pour objet un procédé d'initialisation de pistes radar fusionnées, associant des pistes cartésiennes externes à des piste cartésiennes formées à partir des plots bistatiques produits par un système radar multistatique comportant une pluralité d'émetteurs et de récepteurs distants les uns des autres, un couple (émetteur, récepteur) formant une base bistatique du système, chaque plot bistatique $P_i$ correspondant à l'écho émis par un récepteur $Tx_j$ et reçu par un récepteur $E_k$ et étant caractérisé par l'émetteur $Tx_j$ ayant émis le signal dont il est l'écho. Le procédé selon l'invention associe le procédé d'initialisation de pistes cartésiennes selon l'invention à un traitement d'association complémentaire comportant deux étapes:

- une première étape qui procède à l'association des pistes cartésiennes externes pour construire des pistes externes fusionnées dont les attributs sont fonctions des attributs de pistes cartésiennes externes à l'origine de la fusion;
- une deuxième étape qui a pour fonction de tenter l'association de plots radar bistatiques libres, non encore associés pour initialiser des pistes cartésiennes radar, à des pistes cartésiennes fusionnées externes formées au cours de l'étape précédente.

Un tel procédé, quoique de portée générale, est avantageusement adapté à l'initialisation de pistes dans le cadre du procédé de pistage qui fait l'objet de la demande de brevet français 0904144 citée précédemment.

Les caractéristiques et avantages de l'invention seront mieux appréciés grâce à la description qui suit, description qui s'appuie sur les figures annexées qui représentent:

- la figure 1, le schéma synoptique d'un exemple de procédé de pistage adapté à un système radar passif multi-récepteurs;
- La figure 2, le synoptique d'un premier exemple de module d'initialisation de pistes cartésiennes mettant en oeuvre le procédé d'association 3D (association en trois dimensions) de plots bistatiques selon l'invention;
- la figure 3, le synoptique du procédé d'association 3D de plots bistatiques selon l'invention;
- la figure 4, le synoptique du module de formation de triplets de couples (Plot, Emetteur) compatibles, du procédé d'association 3D de plots bistatiques selon l'invention;
- la figure 5, le synoptique de principe du module de formation de n-uplets du procédé d'association 3D de plots bistatiques selon l'invention;
- la figure 6, le synoptique d'un second exemple de module d'initialisation mettant en oeuvre le procédé d'association 3D de plots bistatiques selon l'invention;
- la figure 7, un exemple de procédé d'initialisation qui réalise une initialisation de pistes cartésiennes radar en associant des plots bistatiques et des pistes cartésiennes déjà formées.

La figure 1 présente le schéma synoptique d'un exemple de procédé de pistage adapté à un système radar passif comportant plusieurs récepteurs, chaque récepteur formant, avec les émetteurs d'opportunités présents sur la zone surveillée, différentes bases bistatiques. Un tel procédé comporte naturellement un ou plusieurs modules d'initialisation permettant de former des pistes à partir des détections élémentaires, c'est-à-dire des plots bistatiques formés.

On rappelle ici qu'un plot bistatique correspond à une observation radar ayant donné lieu à la détection d'une cible éventuelle. Cette observation est associée à des mesures spécifiques telles que notamment des mesures de distance bistatique, de vitesse bistatique et d'azimut.

Comme l'illustre la figure 1, le procédé de pistage bistatique pris comme exemple, comporte deux niveaux de fusion d'informations conduisant à la formation et à l'entretien de pistes cartésiennes.

Le premier niveau 11 a pour fonction de réaliser une fusion des informations de détection, des plots bistatiques 13, produites par les bases bistatiques constituées à partir d'un même récepteur et de former et d'entretenir des pistes cartésiennes élémentaires 14 à partir de ces plots bistatiques.

Le second niveau 12 à quant à lui pour fonction de réaliser une fusion des informations de détection produites par l'ensemble des bases bistatiques, tous récepteurs considérés. Le traitement de fusion réalisé consiste principalement à former et à entretenir des pistes cartésiennes globales 15 à partir des pistes cartésiennes élémentaires 14 supposées correspondre à un même objet vu par un même récepteur, ainsi que des plots bistatiques restés libres.

En pratique, une piste cartésienne globale 15 est formée et entretenue en utilisant les plots des pistes cartésiennes élémentaires 14 associées produites au premier niveau 11, ainsi que les plots bistatiques 16 non utilisés au premier niveau pour former des pistes cartésiennes élémentaires 14 (plots non pistés) et que les plots bistatiques 17 correspondant à des pistes cartésiennes élémentaires 14 non encore fusionnées (plots pistés libres).

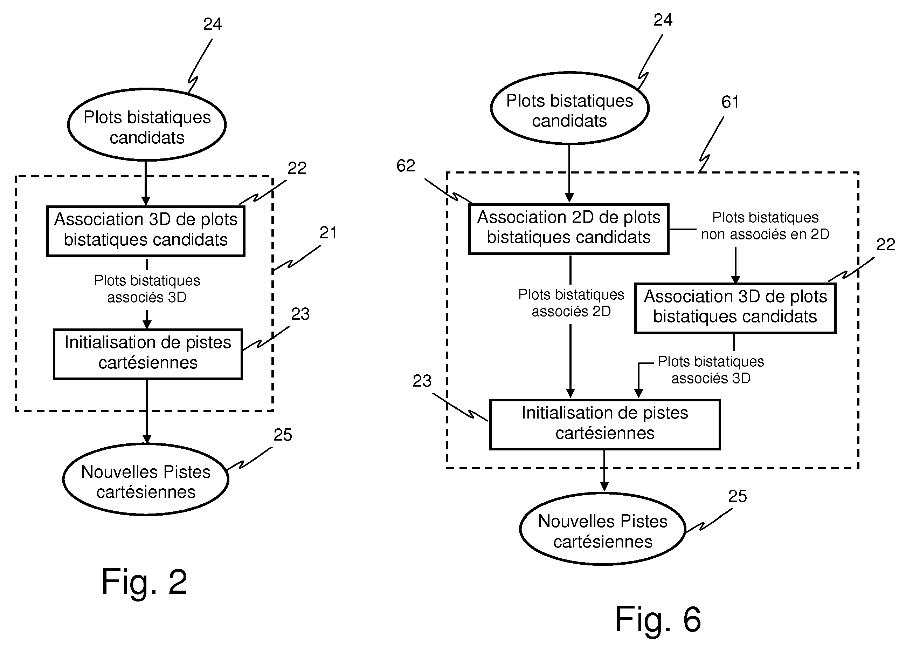

Par ailleurs, comme on peut le constater sur la figure 1, chaque niveau de fusion, de formation et d'entretien de pistes cartésiennes, comporte un module d'initialisation 18 ou 19 qui procède à la constitution de pistes nouvelles, ce module mettant en oeuvre une initialisation adaptée. Les figures 2 et 6 présentent à titre d'exemple les synoptiques de deux modules d'initialisations différents 21 et 61, pouvant correspondre aux modules d'initialisation 18 et 19, mettant en oeuvre le procédé 22 d'association 3D (association en trois dimensions) de plots bistatiques selon l'invention, avant de procéder à l'initialisation 23 proprement dite. La mise en oeuvre du procédé selon l'invention permet avantageusement de limiter le nombre de plots bistatiques à considérer lors de l'initialisation.

De manière générale, comme l'illustre la figure 2, ce procédé utilise des plots bistatiques libres 24 ou plots bistatiques candidats, c'est-à-dire des plots non encore utilisés et candidats pour former de nouvelles pistes cartésiennes 25.

Selon les cas, c'est à dire selon qu'on considère un système mono-récepteur (ou l'étape 18 de pistage mono-récepteur) ou multi-récepteurs (ou l'étape 19 de pistage multi-récepteur), les pistes cartésiennes formées sont dites "pistes cartésiennes élémentaires" (les pistes 14 du pistage de la figure 1 par exemple) ou "pistes cartésiennes fusionnées" (les pistes 15 du pistage de la figure 1 par exemple).

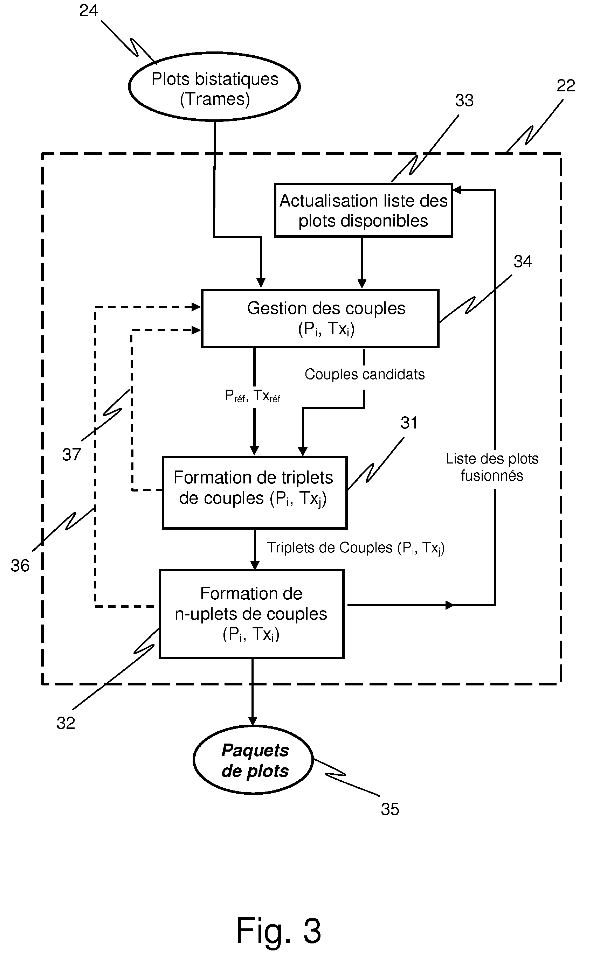

Le procédé d'association 3D de plots bistatiques selon l'invention est illustré par les figures 3, 4 et 5.

Comme l'illustre la figure 3, le procédé 22 d'association 3D de plots bistatiques selon l'invention met en oeuvre deux modules de traitement successifs, un premier module 31 de formation de triplets de couples (plot, émetteur) considérés comme compatibles et un second module 32 de formation de n-uplets de couples (plot, émetteur). Les plots constituant les n-uplets ainsi constitués sont ensuite délivrés au module 23 d'initialisation de pistes proprement dit, sous forme de groupes ou paquets de plots 35.

Ces deux modules de traitement font eux-mêmes appel à deux modules complémentaires, un premier module complémentaire 33 qui établit la liste des plots candidats disponibles et un second module complémentaire 34 qui assure la gestion et la formation de couples (plot, émetteur). Dans la suite du texte on décrit le fonctionnement de chacun des différents modules et l'interaction entre modules.

Il est à noter que par triplets de couples (Plot, Emetteur) "compatibles" on entend des triplets dont les plots correspondent vraisemblablement à une même cible potentielle.

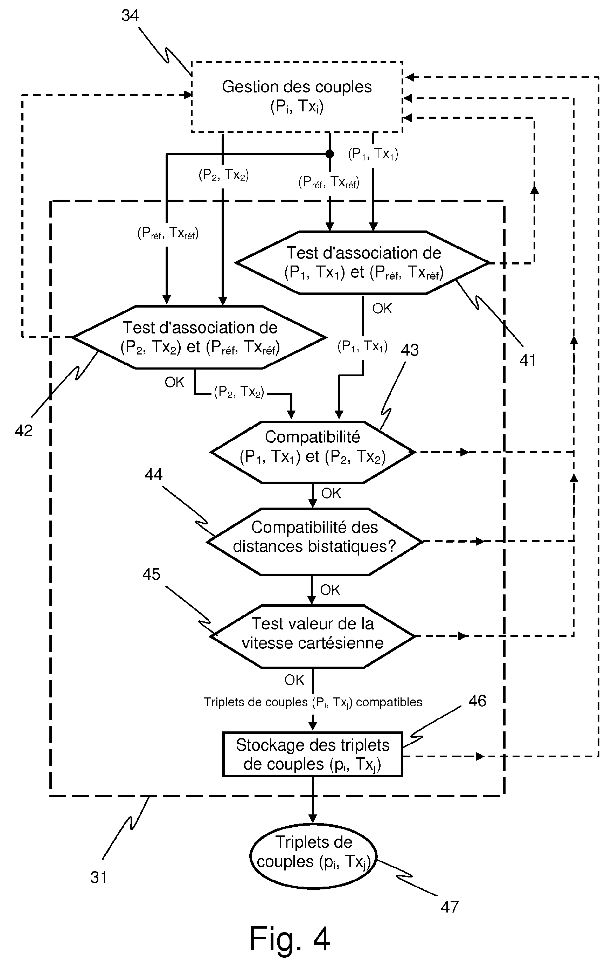

Le module 31 de formation de triplets compatible, ou, plus simplement, module de formation de triplets, est illustré par la figure 4. Il consiste principalement à tenter l'association de trois couples entre eux, chaque couple étant constitué par un plot candidat et un émetteur. Le plot candidat est choisi par le module 34 dans la liste des plots libres définie par le module 33. La formation des couples est réalisée par le module de gestion des couples 34 qui attribue à chaque plot candidat un émetteur parmi ceux qui constituent le système. Cette attribution est faite de manière à ce que lorsque plusieurs plots parmi les trois plots candidats choisis proviennent d'un même récepteur, ils soient associés à des émetteurs différents.

Selon l'invention on tente l'association de tous les triplets de couples (plot, émetteur) possibles, sachant que des triplets sont associés lorsque, bien qu'ils soient formés par des bases bistatiques différentes, ils correspondent vraisemblablement à une même cible.

A cet effet le module 31 de formation des triplets comporte cinq étapes de test distinctes décrites dans la suite du texte. Ces cinq étapes sont réalisées de manière itérative sur l'ensemble des couples (plot, émetteur) possibles, ($P_i$, $Tx_j$) par référence à un couple ($P_{réf}$, $Tx_{réf}$) pris comme référence.

La première étape de test 41 consiste, à déterminer s'il est possible d'associer un premier couple ($P_1$, $Tx_1$), au couple de référence ($P_{réf}$, $Tx_{réf}$), le couple candidat aussi bien que le couple de référence étant déterminé par le module 34 de gestion et de formation des couples. Selon l'invention, le couple ($P_1$, $Tx_1$), est susceptible d'être associé au couple ($P_{réf}$, $Tx_{réf}$) si ces deux couples correspondent vraisemblablement à une même cible.

Selon l'invention, cette étape de test peut être mise en oeuvre de différentes façons connues. Néanmoins dans une forme de mise en oeuvre préférée elle est mise en oeuvre comme décrit ci-après.

Pour cette étape, le procédé selon l'invention distingue deux cas:

- le cas où les plots $P_1$ et $P_{réf}$ sélectionnés par le module 34 ont un même récepteur Rx pour origine.
- le cas où les plots $P_1$ et $P_{réf}$ ont pour origine des récepteurs $Rx_1$ et $Rx_{réf}$ distincts.

Dans le premier cas, l'étape 41 de test d'association consiste, en pratique, à mettre en oeuvre les quatre tests indépendants suivants:

Un premier test (test 1) consiste à déterminer si les vitesses bistatiques $Vb_k(P_1)$ et $Vb_k(P_{réf})$ des plots $P_1$ et $P_{réf}$ peuvent correspondre à une même vitesse de cible. On considère à cet effet que si on a:

$$\left| Vb_k(P_{réf}) - Vb_k(P_1) \right| > 2.V_{max} \,,$$

alors l'association du plot $P_1$ au plot $P_{réf}$ n'est pas vraisemblable. $V_{max}$ représente ici la vitesse maximale des cibles que l'on cherche à détecter grâce au système multistatique considéré.

Un deuxième test (test 2) consiste à déterminer si les valeurs des azimuts associés aux plots $P_1$ et $P_{réf}$ (i.e. les azimuts des observations radar correspondantes) peuvent correspondre à une même de cible, compte tenu des précisions $\sigma_{\theta k}(P_1)$ et $\sigma_{\theta k}(P_{réf})$ des mesures d'azimuts réalisées. On considère à cet effet que si on a:

$$\left| \theta_k(P_{réf}) - \theta_k(P_1) \right| > 3.\sqrt{\sigma_{\theta_k}^2(P_{réf}) + \sigma_{\theta_k}^2(P_1)} \,,$$

alors l'association du plot $P_1$ au plot $P_{réf}$ n'est pas vraisemblable.

Un troisième test (test 3) consiste à déterminer si les ellipsoïdes correspondant aux distances bistatiques des plots $P_1$ et $P_{réf}$, définies respectivement par rapport à l'émetteur et au récepteur formant la base bistatique relative à $P_1$ et à l'émetteur et au récepteur formant la base bistatique relative à $P_{réf}$, présentent des intersections. On considère à cet effet que si on a:

$$\left(Db_k(P_{réf}) - Db_k(P_1)\right)^2 - \left\|\vec{x}_{Txréf} - \vec{x}_{Tx1}\right\|^2 > 0 \; ,$$

alors l'association des plots est impossible.

$\vec{x}_{Tx1} = [x_{Tx1} \; y_{Tx1} \; z_{Tx1}]^T$ correspond ici à la position cartésienne de l'émetteur $Tx_1$ associé à $P_1$ et $\vec{x}_{Txref} = [x_{Txréf} = [^x_{Txréf} \; y_{Txréf} \; z_{Txréf}]^T$ correspond à la position cartésienne de l'émetteur $T_{Xréf}$ associé à $P_{réf}$.

Un Quatrième test (test 4) consiste à déterminer si les intersections des ellipsoïdes construites à partir des distances bistatiques caractérisant les plots $P_1$ et $P_{réf}$, sont compatibles des mesures d'azimuts (i.e. les azimuts des observations correspondantes).

A cet effet on considère le site $\varphi$ selon lequel la cible potentielle correspondant aux plots considérés peut être observée. $\phi$ est défini par la relation:

$$\cos\varphi = \frac{p_{réf} - p_1}{p_{réf}.e_1.\cos(\theta_k - \theta_{0,1}) - p_1.e_2.\cos(\theta_k - \theta_{0,2})}$$

Dans cette relation, $P_1$, $e_1$, $P_{réf}$, $e_{réf}$ sont définis par les relations suivantes (i= 1 ou réf selon le cas):

$$p_i = \frac{Db_k(P_i) - L_i^2}{2.Db_k(P_i)}$$

$$e_i = \frac{L_i}{Db_i}$$

avec

$$L_i = \left\|\vec{x}_{Txi} - \vec{x}_{Rx}\right\|$$

De même, $X_{Rx}$ et $Y_{Rx}$ représentent les coordonnées du récepteur considéré, $\tan\theta_{0,1}$ et $\tan_{0,réf}$ ont pour expressions (i= 1 ou réf selon le cas):

$$\tan\theta_{0,i} = \frac{y_{Txi} - y_{Rx}}{x_{Txi} - x_{Rx}}$$

En outre, $\theta_k$ a pour expression:

$$\theta_k = \left( \frac{\dfrac{\theta_k(P_1)}{\sigma^2_{\theta_k(P_1)}} + \dfrac{\theta_k(P_{réf})}{\sigma^2_{\theta_k(P_{réf})}}}{\dfrac{1}{\sigma^2_{\theta_k(P_1)}} + \dfrac{1}{\sigma^2_{\theta_k(P_{réf})}}} \right)$$

On considère également l'incertitude $\sigma_{\cos\varphi}$ affectant la détermination de $\cos\varphi$ définie par:

$$\sigma_{\cos\varphi} = \sqrt{\left(\frac{\partial\cos\varphi}{\partial Db_k(P_1)}.\sigma_{Db_k(P_1)}\right)^2 + \left(\frac{\partial\cos\varphi}{\partial Db_k(P_{réf})}.\sigma_{Db_k(P_{réf})}\right)^2 + \left(\frac{\partial\cos\varphi}{\partial\theta_k}.\sigma_{\theta_k}\right)^2}$$

Par suite, on considère que si l'on a:

$$\left[\cos\varphi - 3.\sigma_{\cos\varphi}, \cos\varphi + 3.\sigma_{\cos\varphi}\right] \cap [0,1] \neq \varnothing,$$

alors l'association des plots $P_1$ et $P_{réf}$ est impossible.

Selon l'invention, ces quatre tests indépendants qui constituent l'étape de test 41 peuvent être effectués dans un ordre quelconque. Cependant le l'étape de test 41 n'est considérée comme passée avec succès que si les quatre tests décrits précédemment sont passés avec succès par le plot $P_1$ considéré.

Dans le second cas, les plots $P_1$ et $P_{réf}$ ayant pour origine des récepteurs $Rx_1$ et $Rx_{réf}$ distincts, l'étape 41 de test d'association consiste, en pratique, à mettre en oeuvre consécutivement les quatre tests suivants:

Le premier test (test A) consiste à déterminer, par toute méthode appropriée connue, s'il est possible de définir, dans la limite de portée du système de détection considéré, une intersection des directions des azimuts des observations correspondant aux plots $P_1$ et $P_{réf}$.

Dans l'affirmative, cette intersection est calculée, en prenant en compte les incertitudes des mesures des azimuts de sorte que l'on définit une aire d'intersection. Si cette condition n'est condition n'est pas réalisée, l'association des plots est considérée comme impossible.

Le deuxième test (test B) consiste, en considérant les sphères contenant les ellipsoïdes définis par les distances bistatiques des plots $P_1$ et $P_{réf}$, à déterminer, par toute méthode appropriée connue également, si les deux sphères ainsi définies présentent une intersection. Si cela n'est pas le cas, l'association des plots est considérée comme impossible.

Le troisième test (test C) consiste, à déterminer si les deux ellipsoïdes définis précédemment présentent une intersection.

Cette détermination peut par exemple être effectuée au moyen de la méthode du multiplicateur de Lagrange. Pour deux ellipsoïdes E1 et E2, cette méthode consiste à trouver deux ellipsoïdes E1' et E1 ", transformées homothétiques de E1 et respectivement plus petite et plus grande que cette dernière, qui coupent E2. Ce type de résolution est classique dans la gestion informatique des collisions entre objets à trois dimensions.

Le résultat obtenu est une variable booléenne dont la valeur indique si, oui ou non, les deux ellipsoïdes considérés présentent une intersection. S'il n'y a pas d'intersection, l'association des plots est considérée comme impossible.

Le quatrième test (test D) consiste enfin à déterminer si les mesures des distances bistatiques associées aux plots $P_1$ et $P_{réf}$ sont compatible de la zone d'intersection des directions des azimuts des observations correspondant aux plots $P_1$ et $P_{réf}$ déterminées lors du test A.

Selon l'invention, ces quatre tests A, B, C et D qui constituent l'étape de test 41 sont effectués en séquence, l'exécution d'un test n'étant effectuée que si le test précédent est passé avec succès. Par suite, l'étape de test 41 n'est considérée comme passée avec succès que si les quatre tests décrits précédemment sont passés avec succès par le plot $P_1$ considéré.

La deuxième étape de test 42 consiste, à déterminer s'il est possible d'associer un second couple $(P_2, Tx_2)$, également déterminé par le module 34 qui assure la gestion et la formation des couples $(P_i, Tx_j)$, au couple de référence $(P_{éf}, Tx_{réf})$ également déterminé par le module 34.

Comme pour la première étape de test 41, le procédé selon l'invention, dans une forme de mise en oeuvre préférée, distingue encore deux cas:

- le cas où les plots $P_2$ et $P_{réf}$ ont un même récepteur Rx pour origine.
- le cas où les plots $P_2$ et $P_{réf}$ ont pour origine des récepteurs $Rx_2$ et $R_{Xréf}$ distincts.

Les tests unitaires d'association mis en oeuvre lors de l'étape de test 42 sont identiques aux tests décrits précédemment pour la première étape de test 41, en considérant non plus le plot $P_1$ mais le plot $P_2$.

Comme l'illustre la figure 4, chacune des étapes de test 41 et 42 procède d'un fonctionnement itératif. En effet, tant que l'association d'un couple $(P_1, Tx_1)$ et d'un couple $(P_2, Tx_2)$ au couple de référence $(P_{réf}, Tx_{réf})$ n'est pas réalisée, les étapes 41 et 42 sont répétées. Le module 31 procède à un nouvel essai d'association du couple de référence $(P_{réf}, Tx_{réf})$ avec un autre couple candidat. Par ailleurs si aucune association ne s'avère finalement possible avec le couple de référence $(P_{réf}, Tx_{réf})$ considéré, les étapes 41 et 42 sont réitérées en choisissant un nouveau couple de référence. Selon l'invention, le choix d'un couple de référence $(P_{réf}, Tx_{réf})$ donné est effectué par le module de gestion 34 en tenant compte des tests d'association déjà réalisés pour chacune des étapes 41 et 42.

Par suite, l'itération des étapes 41 et 42 s'arrête dès que deux couples candidats $(P_1, Tx_1)$ et $(P_2, Tx_2)$ sont

associés au couple de référence ($P_{réf}$, $Tx_{réf}$). L'exécution du module 31 se poursuit alors par l'étape suivante 43.

Il est à noter que la deuxième étape peut avantageusement être implémentée soit en parallèle avec l'étape 41, comme illustré sur la figure 4, soit à la suite de l'étape 41, dès lors qu'un couple ($P_1$, $Tx_1$) est associé au couple de référence ($P_{réf}$, $Tx_{réf}$) considéré.

La troisième étape de test 43 consiste, quant à elle, à déterminer s'il est possible d'associer, le couple ($P_2$, $Tx_2$) au couple ($P_1$, $Tx_1$) à une même cible. Pour ce faire, on procède de manière analogue aux étapes de test 41 et 42.

Par suite Si le test d'association des couples ($P_2$, $Tx_2$) et ($P_1$, $Tx_1$) est concluant, le triplet de couples ($P_{éf}$, $Tx_{réf}$), ($P_1$, $Tx_1$) et ($P_2$, $Tx_2$) est validé et l'exécution du module 31 se poursuit alors par l'étape suivante 44.

En revanche, si le test échoue, les étapes 41 et 42 sont répétées. Le module 31 procède à un nouvel essai d'association du couple de référence ($P_{éf}$, $Tx_{réf}$) (ou avec un autre couple de référence) avec d'autres couples candidats ($P_2$, $Tx_2$) et ($P_1$, $Tx_1$).

La quatrième étape de test 44 a pour objet de déterminer si les plots associés $P_1$, $P_2$ et $P_{réf}$ correspondent de manière vraisemblable à un même objet, une même cible. Pour ce faire on utilise les mesures de distance bistatique, de vitesse bistatique et d'azimut réalisées sur les observations radar correspondant aux plots $P_1$, $P_2$ et $P_{réf}$. On calcule d'abord la position cartésienne $\vec{x}_{1,2,réf}$ et la vitesse $\vec{v}_{1,2,réf}$ de l'objet correspondant aux plots associés. Puis les résultats obtenus sont utilisés pour réaliser la projection des paramètres de cette cible dans les bases bistatiques ayant produit les plots bistatiques $P_1$, $P_2$ et $P_{réf}$ considérés et comparer les paramètres bistatiques ainsi déterminés à ceux des plots $P_1$, $P_2$ et $P_{réf}$. On s'intéresse en premier lieu aux distances bistatiques.

Par suite, on compare à chaque plots $P_1$, $P_2$ et $P_{réf}$ les projections ainsi obtenues. Pour chaque plot $P_i$ l'inégalité suivante doit être vérifiée

$$\left| Db_k (P_i) - Db_{proj}(P_i) \right| \leq 3.\sqrt{\sigma^2_{Db_k}(P_i) + \sigma^2_{Db_{proj}}(P_i)}$$

Où $Db_{proj}(P_i)$ est la distance bistatique obtenue par projection de $\vec{x}_{1,2,réf}$ dans la base bistatique associée au plot $P_i$, et $\sigma_{Db_{proj}}(P_i)$ l'écart type associé.

Si cette inégalité n'est pas vérifiée, le triplet de couple ($P_1$, $Tx_1$) ($P_2$, $Tx_2$) et ($P_{réf}$, $Tx_{réf}$) est abandonné. Comme dans le cas de l'échec de la troisième étape de test, les étapes 41, 42 et 43 sont alors réitérées avec deux autres couples deux autres couples ($P_1$, $Tx_1$) ($P_2$, $Tx_2$) et le cas échéant avec un autre couple de référence ($P_{éf}$, $Tx_{réf}$).

En revanche, dans le cas contraire, le triplet de couple ($P_1$, $Tx_1$), ($P_2$, $Tx_2$) et ($P_{éf}$, $Tx_{réf}$) est conservé et l'exécution du module 31 se poursuit alors par l'étape suivante 45.

Selon l'invention, les paramètres cartésiens de la cible correspondant aux plots $P_1$, $P_2$ et $P_{réf}$, peuvent bien entendu être déterminés par toute méthode connue à partir des paramètres bistatiques des plots considérés. De même, la projection (i. e. la transposition) des paramètres cartésiens de la cible ainsi déterminée en paramètre bistatiques relatifs aux différentes bases bistatiques à l'origine de $P_1$, $P_2$ et $P_{réf}$, peut être réalisée par toute méthode de projection connue.

Néanmoins il est à noter que la position cartésienne peut être déterminée, comme décrit précédemment, à partir des intersections des ellipsoïdes correspondant aux distances bistatiques des plots $P_1$, $P_2$ et $P_{réf}$.

Par suite, la position cartésienne de la cible étant ainsi déterminée, le calcul de la vitesse cartésienne peut être réalisé de manière simple par toute méthode connue.

La cinquième étape de test 45 du module 31 a pour objet de vérifier que la cible correspondant aux plots associés $P_1$, $P_2$ et $P_{ré}$ correspond bien à une cible réelle. Pour ce faire on compare la valeur absolue de la vitesse cartésienne déterminée à l'étape précédente à un seuil correspondant à la vitesse maximale à laquelle une cible réelle est supposée pouvoir évoluer.

Par suite si le module de la vitesse cartésienne déterminée est supérieur à cette valeur maximale, le triplet de couple ($P_1$, $Tx_1$) ($P_2$, $Tx_2$) et ($P_{réf}$, $Tx_{réf}$) est abandonné. Comme dans le cas de l'échec de la troisième ou de la quatrième étape de test, les étapes 41 à 44 sont alors réitérées avec deux autres couples deux autres couples ($P_1$, $Tx_1$) ($P_2$, $Tx_2$) et le cas échéant avec un autre couple de référence ($P_{réf}$, $Tx_{réf}$).

Dans le cas contraire le triplet de couple considéré est finalement conservé.

D'un point de vue fonctionnel global, le module 31 a pour objet de déterminer, en considérant un couple (plot, émetteur) donné pris comme référence ($P_{réf}$, $Tx_{réf}$), l'ensemble des couples ($P_i$, $Tx_j$) associables en triplets, c'est-à-dire susceptibles de correspondre à une même cible. Par suite son exécution est réitérée en considérant successivement toutes les associations possibles des couples formant la liste des couples candidats avec le couple de référence ($P_{réf}$, $Tx_{réf}$). Finalement, l'itération du module 31 cesse lorsque toutes les associations possibles en triplets ont été testées.

Par ailleurs chacune des itérations réalisées se termine, en cas de succès des tests d'association, par une étape 46 durant laquelle on procède le cas échéant à la mémorisation du triplet $(P_1, Tx_1)$ $(P_2, Tx_2)$ et $(P_{réf}, Tx_{réf})$ constitué pour cette itération.

Il est à noter que la détermination à chaque instant des couples $(P_1, Tx_1)$ $(P_2, Tx_2)$ et $(P_{éf}, Tx_{réf})$ dont on doit déterminer la possibilité d'association, est réalisée par le module de gestion 34. Pour réaliser cette tâche le module 34 reçoit de la part du module 31 des informations relatives à l'échec des tests réalisé durant les étapes de test 41 à 45. La transmission de ces informations est symbolisée par les flèches entraits discontinus sur la figure 4.

Ainsi, si le test réalisé par l'étape 41 ou l'étape 42 échoue, le couple $(P_1, Tx_1)$ ou $(P_2, Tx_2)$ considéré est remplacé par un autre couple candidat et le module 31 est de nouveau exécuté. En outre, si tous les couples candidats ont été testés sans succès avec le couple de référence considéré celui-ci est remplacé, par le module de gestion 34, par un autre couple de référence.

De même, si le test réalisé par l'étape 43, 44 ou 45 échoue, les couples $(P_1, Tx_1)$ et $(P_2, Tx_2)$ considérés sont remplacés, par le module de gestion 34, par deux autres couples candidats et le module 31 est de nouveau exécuté. En outre, si tous les couples candidats ont été testés sans succès avec le couple de référence celui-ci est remplacé par un autre couple de référence.

Par ailleurs, il est également à noter que, lorsque l'association de couples candidats $(P_1, Tx_1)$ et $(P_2, Tx_2)$ et du couple de référence $(P_{réf}, Tx_{réf})$ considéré est réalisée avec succès, le module 31 transmet au module 34, lors de l'étape 46, une information de fin d'exécution qui renseigne ce module sur le fait qu'une nouvelle association du couple de référence $(P_{réf}, Tx_{réf})$ avec d'autres couples candidats $(P_1, Tx_1)$ et $(P_2, Tx_2)$ peut être tentée. En outre, si tous les couples candidats ont été testés, avec ou sans succès, avec le couple de référence, le processus de formation de triplets à partir du couple de référence $(P_{réf}, Tx_{réf})$ est terminé et l'exécution du module 31 cède la place à l'exécution du module 32 de formation de n-uplets.

Ainsi, le module de gestion 34 gère l'exécution itérative du module 31 de formation de triplets, cette exécution étant stoppée lorsque, pour le couple de référence $(P_{réf}, Tx_{réf})$ considéré, l'ensemble des triplets de couples candidats ont été considérés.

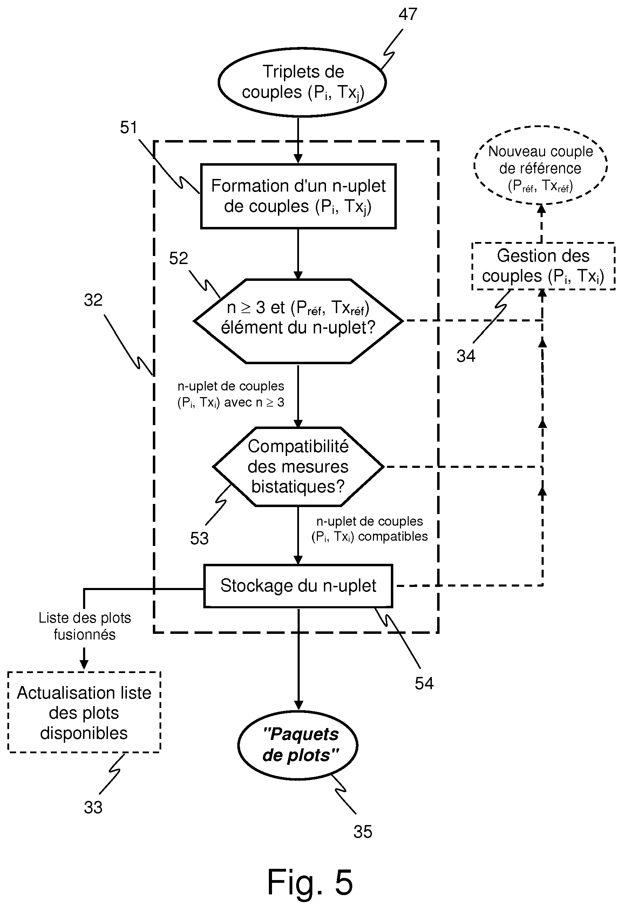

Les triplets validés, mémorisés durant l'étape 46 du module 31, sont utilisés par le module 32 de formation de n-uplets. Le synoptique de principe du module 32, présenté sur la figure 5 montre que ce module comporte quatre étapes de traitement.

La première étape 51 a pour objet d'analyser les triplets validés disponibles. Ces triplets construits par implémentation du module 31 comportent un même couple de référence $(P_{réf}, Tx_{réf})$. L'analyse consiste ici à déterminer, en comparant tous les triplets formés, les couples $(P_i, Tx_j)$ pour lesquels les propriétés suivantes sont vérifiées pour tous les triplets simultanément:

- le plot $P_i$ est toujours associé à un même émetteur $Tx_j$,
- l'émetteur $Tx_j$ est toujours associé à un même plot $P_i$.

Par suite, les couples (plot, émetteur) vérifiant ces deux propriétés sont associés dans un même ensemble appelé n-uplet, n représentant le nombre de couples $(P_i, Tx_j)$ formant l'ensemble considéré.

Ainsi, par exemple, si pour un couple de référence donné $(P_1, Tx_1)$ on dispose après exécution du module 31 de quatre triplets décrits par le tableau 1 suivant:

| Triplet n°1 | | Triplet n°2 | | Triplet n°3 | | Triplet n°4 | |
|---|---|---|---|---|---|---|---|
| $Tx_1$ | $P_1$ | $Tx_1$ | $P_1$ | $Tx_1$ | $P_1$ | $Tx_1$ | $P_1$ |
| $Tx_2$ | $P_2$ | $Tx_2$ | $P_3$ | $Tx_4$ | $P_6$ | $Tx_4$ | $P_6$ |
| $Tx_3$ | $P_3$ | $Tx_4$ | $P_6$ | $Tx_5$ | $P_5$ | $Tx_7$ | $P_4$ |

le n-uplet formé à partir de ces triplets conformément au procédé selon l'invention, un quadruplet dans cet exemple, sera décrit par le tableau 2 suivant:

| n-uplet | |
|---|---|
| $Tx_1$ | $P_1$ |
| $Tx_4$ | $P_6$ |
| $Tx_5$ | $P_5$ |
| $TX_7$ | $P_4$ |

Les plots $P_2$ et P3, sont ici écarté du quadruplet du fait que $TX_2$ est associé à deux plots différents, à savoir $P_2$ et $P_3$, et que $P_3$ est associé à deux émetteurs différents, à savoir $TX_2$ et $Tx_3$.

Ainsi, pour le couple de référence ($P_{réf}$, $Tx_{réf}$) considéré, l'étape 51 permet de former de n-uplets de couples ($P_i$, $Tx_j$) pour lesquels chaque plot est associé bijectivement à un émetteur.

La deuxième étape 52 a pour objet d'analyser de filtrer les n-uplets formés lors de l'étape 51 en fonction du nombre et de la nature des couples ($P_i$, $Tx_j$) contenus dans ces n-uplets.

Ainsi, selon l'invention, si le n-uplet formé comporte moins de trois couples ou encore si ce n-uplet ne comprend pas le couple de référence ($P_{réf}$, $Tx_{réf}$), à partir duquel les triplets ont été formés, le n-uplet formé est éliminé. Par suite, le module 32 transmet au module 34 de gestion des couples ($P_i$, $Tx_i$) une information conduisant le module 34 à choisir un autre couple ($P_i$, $Tx_j$) comme couple de référence et à relancer l'exécution du module 31. En revanche, si le n-uplet formé comporte trois couples ou plus, et si ce n-uplet comprend le couple de référence ($P_{réf}$, $Tx_{réf}$) il est conservé et utilisé lors de l'étape suivante.

La troisième étape 53 du module 32 a pour objet de vérifier la cohérence du n-uplet de couples formés à l'étape 51 et ayant passé l'étape 52. Cette vérification de cohérence consiste principalement à déterminer si les plots formant les couples du n-uplet correspondent de manière vraisemblable à un même objet.

Pour ce faire, comme dans le cas de l'étape de test 44 du module 31 de formation de triplets, on utilise les mesures de distance bistatique, de vitesse bistatique et d'azimut réalisées sur les observations radar correspondant aux plots formant le n-uplet. On calcule d'abord la position cartésienne et la vitesse de l'objet correspondant aux plots considérés. Puis les résultats obtenus sont utilisés pour réaliser la projection (i. e. la transposition) des paramètres cartésiens de la cible ainsi déterminée en paramètre bistatiques relatifs aux différentes bases bistatiques ayant produit les plots considérés, et comparer les paramètres bistatiques ainsi déterminés à ceux de ces plots.

Dans le cas où la vérification est positive, le n-uplet est conservé.

Dans le cas contraire, il est rejeté et le module 32 transmet au module 34 de gestion des couples ($P_i$, $Tx_i$) une information conduisant ce module à choisir un autre couple ($P_i$, $Tx_j$) comme couple de référence et à relancer l'exécution du module 31 et du module 32.

La quatrième étape 54 consiste quant à elle à mémoriser les n-uplets ayant passé les étapes 52 et 53 avec succès, les plots formant ces n-uplets, destinés à être utilisés pour former des pistes cartésiennes nouvelles, constituent des paquets ou groupes de plots qui sont transmis au module 23 d'initialisation de pistes proprement dit.

Elle consiste également à transmettre une information au module 34 de gestion, conduisant ce module à choisir un autre couple ($P_i$, $Tx_j$) comme couple de référence et à relancer l'exécution du module 31 et du module 32.

Elle consiste encore, au moment ou un n-uplet est mémorisé, à transmettre au module 33 d'actualisation de la liste des plots disponibles, la liste des plots constituant le n-uplet. Le module 33 actualise la liste des plots disponibles en conséquence et communique la liste actualisée au module de gestion 34 qui gère les couples ($P_i$, $Tx_j$) candidats, auxquels le module 31 de formation de triplets est appliqué.

D'un point de vue fonctionnel global le module 32 de formation de n-uplet est exécuté pour chaque couple de référence ($P_{réf}$, $Tx_{réf}$) à partir des triplets de couples (plot, émetteur) constitués par exécution itérative du module 31. Par suite le procédé d'association 3D de plots selon l'invention fonctionne à partir de deux boucles d'itération imbriquées, gérées à partir du module de gestion 34 et du module 33 d'actualisation. La première boucle, sur l'ensemble des couples candidats ($P_i$, $Tx_j$), illustrée par la flèche 36 en trait discontinu sur la figure 3, concerne l'exécution itérative du module 31. La seconde boucle effectuée sur l'ensemble des couples de référence ($P_{réf}$, $Tx_{réf}$), illustrée par la flèche 37 en trait discontinu sur la figure 3, concerne l'exécution itérative de l'ensemble constitué par les modules 31 et 32.

Ainsi, la mise en oeuvre du procédé selon l'invention consiste pour un couple ($P_{réf}$, $Tx_{réf}$) à exécuter une séquence consistant:

- à déterminer, par itérations successives du module 31 sur les couples ($P_i$, $Tx_j$), l'ensemble des triplets compatibles déterminés à partir du couple ($P_{réf}$, $Tx_{réf}$);
- à former à partir de ces triplets, le n-uplet correspondant au couple ($P_{réf}$, $Tx_{réf}$), par exécution du module 32;

cette séquence étant répétée pour chaque couple (plot, émetteur) défini comme couple de référence par le module 34 à partir de la liste de plots disponibles élaborée par le module 33.

Les n-uplets de plots ainsi obtenus par mise en oeuvre du procédé d'association 3D de plots selon l'invention sont mis en mémoire sous forme d'un ensemble de plots validés qui peuvent par exemple être utilisé, comme décrit dans la suite du document, dans un procédé global d'initialisation de pistes cartésiennes à partir de plots bistatiques dans le cadre, par exemple, du pistage réalisé par un radar multistatique comportant un ou plusieurs récepteurs formant une pluralité de bases bistatiques.

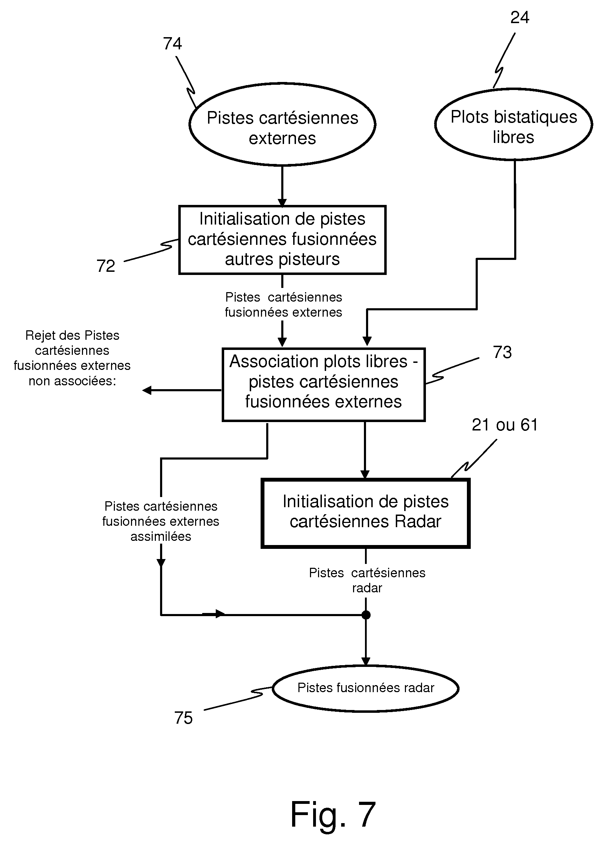

Comme l'illustrent les figures 2, 6 et 7, le procédé selon l'invention peut être mis en oeuvre en tant qu'étape d'un procédé d'initialisation de pistes, préliminaire à une étape d'initialisation 23 proprement dite. Les figures 2 et 6 présentent plus particulièrement des exemples de procédés d'initialisation de pistes cartésiennes 25, qui ne prennent en considération que des plots bistatiques 24, procédés applicables notamment pour réaliser l'initialisation de pistes cartésiennes élémentaire 18 du procédé de pistage présenté à la figure 1. La figure 7, quant à elle, présente plus particulièrement un exemple de procédé d'initialisation qui réalise une initialisation de pistes cartésiennes radar en associant des plots bistatiques et des pistes cartésiennes déjà formées, provenant par exemple d'autres moyens techniques associés au système radar multistatique considéré.

Dans le procédé 21 d'initialisation illustré par la figure 2, les plots bistatiques 24 produits à un instant donné, plots qui correspondent à des observations réalisées par le système radar et considérées comme relatives à des cibles potentielles, sont directement exploités par l'étape préliminaire 22 mettant en oeuvre le procédé selon l'invention. Par suite les couples (plot, Emetteur) retenus à l'issue de l'étape 22 significatifs, correspondant vraisemblablement à des cibles, sont utilisés lors de l'étape 23 d'initialisation de pistes proprement dite.

L'étape d'initialisation 23 peut être réalisée de différentes façons connues, dans la mesure où elle consiste à déterminer, à partir des paramètres des plots formant les n-uplets constitués à l'issue de l'étape 22, les paramètres des cibles correspondantes. Cependant dans une forme préférée de mise en oeuvre, l'étape d'initialisation est réalisée en différentes sous-étapes:

- une première sous-étape durant laquelle on réalise une première estimation grossière de la position de la cible. Cette première estimation est réalisée par mise en oeuvre de l'algorithme du gradient ou par toute méthode appropriée connue. Ces méthodes nécessitent trois plots ou plus lorsque seule l'information de distance bistatique est utilisée.

- une deuxième étape durant laquelle on réalise un calcul d'intersection exhaustif qui permet de déterminer de manière connue la position de la cible, ainsi qu'une estimation de la matrice de covariance associée à cette position, à partir des mesures des distances bistatiques des plots considérés et de la précision de ces distances, ainsi que des positions du récepteur et des émetteurs considérés. Une méthode permettant de réaliser un calcul exhaustif est notamment décrite dans la demande de brevet français portant le numéro FR2910131.

Par suite une piste est initialisée si:

- la position de la cible peut être déterminée
- les écarts-types estimés des coordonnées cartésiennes(x, y, z) de la cible ne dépassent pas une valeur donnée.

Dans ce cas la deuxième étape est suivie:

- d'une troisième sous-étape durant laquelle on calcule la vitesse de la cible;
- d'une quatrième sous-étape durant laquelle on estime la matrice de covariance initiale C de l'état de la cible à partir des bornes de Cramer Rao déterminées grâce aux précisions des mesures en distance bistatique, vitesse bistatique et azimut. Pour N plots $P_1$, $P_2$, ..., $P_N$ les bornes de Cramer Rao s'écrivent de la manière suivante:

$$C = P.\begin{pmatrix} \sigma^2_{Db_k}(P_1) & 0 & \cdots & 0 & 0 \\ 0 & \sigma^2_{Vb_k}(P_1) & \ddots & 0 & 0 \\ \vdots & \ddots & \ddots & \ddots & \vdots \\ 0 & 0 & \ddots & \sigma^2_{Db_k}(P_N) & 0 \\ 0 & 0 & \cdots & 0 & \sigma^2_{Vb_k}(P_N) \end{pmatrix}.P^T$$

Avec

$$P = \begin{pmatrix} \dfrac{\partial Db_k(P_1)}{\partial x} & \dfrac{\partial Vb_k(P_1)}{\partial x} & \cdots & \dfrac{\partial Db_k(P_N)}{\partial x} & \dfrac{\partial Vb_k(P_N)}{\partial x} \\[2ex] \dfrac{\partial Db_k(P_1)}{\partial v_x} & \dfrac{\partial Vb_k(P_1)}{\partial v_x} & \cdots & \dfrac{\partial Db_k(P_N)}{\partial v_x} & \dfrac{\partial Vb_k(P_N)}{\partial v_x} \\[2ex] \dfrac{\partial Db_k(P_1)}{\partial y} & \dfrac{\partial Vb_k(P_1)}{\partial y} & \cdots & \dfrac{\partial Db_k(P_N)}{\partial y} & \dfrac{\partial Vb_k(P_N)}{\partial y} \\[2ex] \dfrac{\partial Db_k(P_1)}{\partial v_y} & \dfrac{\partial Vb_k(P_1)}{\partial v_y} & \cdots & \dfrac{\partial Db_k(P_N)}{\partial v_y} & \dfrac{\partial Vb_k(P_N)}{\partial v_y} \\[2ex] \dfrac{\partial Db_k(P_1)}{\partial z} & \dfrac{\partial Vb_k(P_1)}{\partial z} & \cdots & \dfrac{\partial Db_k(P_N)}{\partial z} & \dfrac{\partial Vb_k(P_N)}{\partial z} \\[2ex] \dfrac{\partial Db_k(P_1)}{\partial v_z} & \dfrac{\partial Vb_k(P_1)}{\partial v_z} & \cdots & \dfrac{\partial Db_k(P_N)}{\partial v_z} & \dfrac{\partial Vb_k(P_N)}{\partial v_z} \end{pmatrix}$$

- d'une cinquième sous-étape durant laquelle la nouvelle piste est construite en associant tous les attributs qui la caractérisent.

Dans le procédé d'initialisation 61 illustré par la figure 6, plus complexe que celui présenté sur la figure 2, l'étape 22 mettant en oeuvre le procédé d'association 3D de plots selon l'invention est associée à une étape complémentaire 62 mettant en oeuvre un procédé d'association 2D de plots, procédé simplifié consistant à tenter d'associer les plots bistatiques 24 produits par le système radar, l'analyse de la compatibilité des plots étant dans ce cas réalisée en ne tenant pas compte de l'altitude des observations correspondant aux plots considérés, ni des altitudes relatives des émetteurs et des récepteurs constituant le système radar. Il permet généralement d'effectuer de manière simple une première association de plots qui sont directement transmis à l'étape 23 d'initialisation proprement dite. Par suite, l'étape 22 d'association 3D de plots n'est appliquée qu'aux seuls plots n'ayant pu faire l'objet d'une association lors de l'étape 62 d'association 2D.

Comparée à la forme précédente, cette forme de mise en oeuvre du procédé d'initialisation, présente l'avantage de permettre de traiter dans un même temps un plus grand nombre de plots bistatiques, l'étape 62 étant d'une exécution plus rapide que l'étape 22.

Le procédé de l'étape 62 d'association 2D, consiste globalement à associer a priori des plots bistatiques et à tester la validité de cette association en déterminant si une cible réelle peut correspondre à cette association, sachant que toutes les associations possibles sont étudiées. La détermination est principalement réalisée en recherchant les intersections des projections dans un même plan horizontal des ellipsoïdes définies à partir des distances bistatiques des plots associés.

Différentes méthodes connues, non décrites ici, permettent de réaliser une telle association 2D.

Cependant, dans une forme de mise en oeuvre préférée, l'association 2D est réalisée en mettant en oeuvre un module d'association comportant deux étapes

La première étape associe deux plots formés à partir d'un même récepteur; ces deux plots formant une base à laquelle sont ensuite associés successivement les plots formés à partir de tous les récepteurs. Durant cette première étape la validité de l'association des deux premiers plots formés à partir d'un même récepteur est d'abord testée. Si cette validité est vérifiée, on teste la validité de l'association de ces deux plots avec les plots formés à partir de tous les récepteurs en les choisissant l'un après l'autre. La première étape est réalisée pour toutes les associations possibles. Par suite les n-uplets de plots constituant des associations validées sont considérés comme correspondant vraisemblablement à une même cible réelle et mémorisés.

La seconde étape quant à elle associe d'abord deux plots formés à partir de récepteurs différents et teste la validité de cette association, puis associe ces deux plots avec tous les autres plots issus de tous les récepteurs l'un après l'autre.

Par suite, comme pour la première étape, les n-uplets de plots constituant des associations validées sont considérés comme correspondant vraisemblablement à une même cible réelle et mémorisés. Cependant les triplets de plots testés sont ici ceux qui ne font partie d'aucun des n-uplets retenus lors de la première étape.

Dans le cas où il n'y a qu'un seul récepteur, seule la première étape est réalisée.

Le procédé 71 d'initialisation de pistes radar fusionnées, illustré par la figure 7, intègre le procédé d'initialisation 61 illustré par la figure 6 dans une structure fonctionnelle plus large. Le procédé présenté a pour objet de réaliser l'initialisation de nouvelles pistes cartésiennes à partir de plots bistatiques et de pistes cartésiennes déjà formées. En particulier, dans le cas où l'on dispose de pistes cartésiennes délivrées par des moyens annexes associés au système radar multistatique considéré, le procédé illustré par la figure 7 a pour objet, dans un premier temps, de tenter de fusionner les pistes cartésiennes externes produite à partir de moyens divers associés au radar, puis d'associer à ces pistes cartésiennes fusionnées, dites "pistes cartésiennes fusionnées externes" des plots bistatiques radar nouvellement formés et non encore utilisés pour former des pistes cartésiennes radar.

Le procédé 71 présenté ici associe au procédé d'association selon l'invention dans sa forme simple 21 (association 3D, 22) illustrée par la figure 2 ou dans sa forme plus élaborée 61 (Associations 3D, 22, et 2D, 62) illustrée par la figure 6, à un traitement d'association complémentaire comportant deux étapes 72 et 73:

La première étape 72 procède à l'association des pistes cartésiennes externes 74, l'association de ces pistes cartésiennes externes entre elles pouvant être réalisée, selon l'invention, par toute méthode connue, appropriée à la fusion de pistes. La fonction de cette étape d'association est d'abord de déterminer si deux pistes cartésiennes externes sont compatibles c'est-à-dire si elles peuvent être considérées comme représentant un même objet. C'est ensuite, si tel est le cas, de construire une piste fusionnée dont les attributs sont fonctions des attributs des deux pistes cartésiennes externes reconnues comme compatibles. L'étape 72 délivre ainsi des pistes cartésiennes fusionnées dites "pistes cartésiennes fusionnées externes".

La deuxième étape 73 a pour fonction de tenter l'association de plots radar bistatiques libres, non encore associés pour initialiser des pistes cartésiennes radar, à des pistes cartésiennes fusionnées externes formées au cours de l'étape précédente 72. Selon l'invention, l'association est réalisée par toute méthode d'association plot-piste connue qui permet d'entretenir une piste à l'aide de plots, un plot correspondant à la détection et à la caractérisation d'un objet donné. Elle comporte notamment la mise en oeuvre d'un test d'association plot-piste.

Par suite, si une piste fusionnée externe est susceptible d'être associée à un plot bistatique, l'association est réalisée et la piste intègre ce plot. La piste ainsi formée dite "pistes cartésiennes externes fusionnées assimilées" est considérée comme une piste radar initialisée. En revanche, si une piste cartésienne fusionnée externe qui n'est susceptible d'être associée à aucun plot bistatique, est rejetée.

Selon ce procédé, les plots bistatiques libres non associés sont transmis au procédé d'association 3D de plots selon l'invention 21 ou 61 pour initialiser des pistes radar.

Suivant cette application, comme l'illustre la figure 7, les pistes radar ainsi initialisées à l'issue par mise en oeuvre du procédé 21 ou 61 selon l'invention, ainsi que les pistes cartésiennes externes fusionnées assimilées, constituent de nouvelles pistes cartésiennes radar 75, destinées à être exploitées par des moyens de pistage du radar proprement dits.

## Revendications

1. Procédé (22) pour réaliser l'association de plots bistatiques correspondant à une même cible détectée par un système radar multistatique comportant une pluralité d'émetteurs et de récepteurs distants les uns des autres, un couple (émetteur, récepteur) formant une base bistatique du système, chaque plot bistatique $P_i$ correspondant à l'écho provenant du signal émis par un émetteur $Tx_j$ et reçu par un récepteur $E_k$, chaque plot bistatique $P_i$ étant **caractérisé par** l'émetteur $Tx_j$ ayant émis le signal dont il est l'écho, les plots bistatiques formés étant associés aux différents émetteurs du système pour former un ensemble de couples (plot, émetteur),

   ledit procédé étant **caractérisé en ce qu'**il comporte :

   - un premier module (31) de formation de triplets de couples (Pi, $Tx_j$), ces triplets, regroupant des couples (plot, émetteur) qui présentent une compatibilité de distance et de vitesse;
   - un second module (32) de formation de n-uplets de couples (Pi, $Tx_j$), ces n-uplets regroupant des triplets formés à l'étape précédente répondant à des critères de regroupement donnés qui caractérisent la vraisemblance de l'attribution des différents triplets à une même cible;

   Les n-uplets ainsi constitués formant des paquets de plots (35) qui définissent une même cible.

2. Procédé selon la revendication 1, **caractérisé en ce que** la première étape (31) de formation de triplets de couples (plot, émetteur) est une étape itérative qui considère à chaque itération trois couples (plot, émetteur), un premier couple ($P_1$, $Tx_1$), un second couple ($P_2$, $Tx_2$) et un troisième couple ($P_{éf}$, $Tx_{réf}$) pris comme un couple de référence et qui leur applique une opération d'association qui teste la possibilité d'associer le premier couple ($P_1$, $Tx_1$) et le second couple ($P_2$, $Tx_2$) au couple de référence ($P_{éf}$, $Tx_{réf}$), un couple (plot, émetteur) étant associable au couple de référence si les caractéristiques de la cible correspondant au plot considéré sont compatibles des caractéristiques de la cible correspondant au plot formant le couple de référence; trois couples ($P_{éf}$, $Tx_{réf}$), ($P_1$, $Tx_1$) et ($P_2$, $Tx_2$), pour lesquels le test d'association est réussi formant un triplet de couples (47).

3. Procédé selon la revendication 2, **caractérisé en ce que** la première étape de formation de triplets de couples (plot, émetteur) comporte elle-même les opérations suivantes:

- un premier test (41) d'association pour déterminer si les couples ($P_{réf}$, $Tx_{réf}$) et ($P_1$, $Tx_1$) sont associables;
- un deuxième test (42) d'association pour déterminer si les couples ($P_{réf}$, $Tx_{réf}$) et ($P_2$, $Tx_2$) sont associables;
- un troisième test (43) de compatibilité des couples ($P_1$, $Tx_1$) et ($P_2$, $Tx_2$)
- un quatrième test (44) de compatibilités des distances bistatiques des plots
- un cinquième test (45) de test de la vraisemblance de la vitesse cartésienne de la cible correspondant aux plots associés;
- une sixième opération (46) de mémorisation des triplets (47) formés de couples ($P_1$, $Tx_1$) et ($P_2$, $Tx_2$) ayant réussi tous les tests;

le test d'association mis en oeuvre lors du premier test (41) étant identique à celui mis en oeuvre lors du second test (42).

4. Procédé selon la revendication 3, **caractérisé en ce que**, dans le cas où les plots $P_1$ et $P_{réf}$ sélectionnés par le module 34 ont un même récepteur Rx pour origine, le test d'association mis en oeuvre lors du premier (41) test consiste à mettre en oeuvre les quatre tests indépendants suivants:

- un premier test (test 1) consistant à déterminer si les vitesses bistatiques $Vb_k(P_1)$ et $Vb_k(P_{réf})$ des plots $P_1$ et $P_{réf}$ peuvent correspondre à une même vitesse de cible, le premier test étant négatif si l'on a:

$$\left| Vb_k(P_{réf}) - Vb_k(P_1) \right| > 2.V_{max}$$

Où $V_{max}$ représente la vitesse maximale des cibles que l'on cherche à détecter;
- Un deuxième test (test 2) consistant à déterminer si les valeurs des azimuts associés aux plots $P_1$ et $P_{réf}$ peuvent correspondre à une même cible, compte tenu des précisions $\sigma_{\theta k}(P_1)$ et $\sigma_{\theta k}(P_{réf})$ des mesures d'azimuts réalisées; le deuxième test étant négatif si l'on a:

$$\left| \theta_k(P_{réf}) - \theta_k(P_1) \right| > 3.\sqrt{\sigma_{\theta_k}^2(P_{réf}) + \sigma_{\theta_k}^2(P_1)} \; ;$$

- Un troisième test (test 3) consistant à déterminer si les ellipsoïdes correspondant aux distances bistatiques des plots $P_1$ et $P_{réf}$ présentent des intersections, le troisième test étant négatif si l'on a:

$$\left( Db_k(P_{réf}) - Db_k(P_1) \right)^2 - \left\| \vec{x}_{Txréf} - \vec{x}_{Tx1} \right\|^2 > 0 \, ,$$

où $\vec{x}_{Tx1}$ - $[x_{Tx1}\, y_{Tx1}\, z_{Tx1}]^T$ et $\vec{x}_{Txréf}$ -$[x_{Txréf}\, y_{Txréf}\, z_{Txréf}]^T$ correspondent ici respectivement à la position cartésienne de l'émetteur $Tx_1$ associé à $P_1$ et à la position cartésienne de l'émetteur $Tx_{réf}$ associé à $P_{réf}$;

Un Quatrième test (test 4) consistant à déterminer si les intersections des ellipsoïdes construites à partir des distances bistatiques caractérisant les plots $P_1$ et $P_{réf}$, sont compatibles des mesures d'azimuts relatives à ces plots le quatrième test étant négatif si l'on a:

$$\left[ \cos\varphi - 3.\sigma_{\cos\varphi}, \cos\varphi + 3.\sigma_{\cos\varphi} \right] \cap [0,1] \neq \varnothing \, ,$$

où $\varphi$ correspond au site selon lequel la cible potentielle correspondant aux plots considérés peut être observée et $\sigma_{\cos\varphi}$ l'incertitude affectant la détermination de $\cos\varphi$;
le test d'association étant positif si les résultats des quatre tests sont positifs.

5. Procédé selon la revendication 4, **caractérisé en ce que**, dans le cas où les plots $P_2$ et $P_{réf}$ sélectionnés par le module 34 ont un même récepteur Rx pour origine, le test d'association mis en oeuvre lors du second (42) test consiste à mettre en oeuvre, sur les plots $P_2$ et $P_{réf}$, les quatre tests indépendants mis en oeuvre lors du premier test.

6. Procédé selon la revendication 3, **caractérisé en ce que**, dans le cas où les plots $P_1$ et $P_{réf}$ sélectionnés par le module 34 ont pour origine des récepteurs $Rx_1$ et $Rx_{ref}$ distincts, le test d'association mis en oeuvre lors du premier (41) test consiste à mettre en oeuvre consécutivement les quatre tests suivants:

   - un premier test (test A) consistant à déterminer s'il est possible de définir, dans la limite de portée du système de détection considéré, une intersection des directions des azimuts des observations correspondant aux plots $P_1$ et $P_{réf}$; et, dans l'affirmative, à calculer cette intersection, en prenant en compte les incertitudes des mesures des azimuts de sorte que l'on définit une aire d'intersection;
   - un deuxième test (test B) consistant, si le test A est positif, à déterminer si les deux sphères contenant les ellipsoïdes définis par les distances bistatiques des plots $P_1$ et $P_{réf}$ présentent une intersection;
   - un troisième test (test C) consistant, si le test B est positif, à déterminer si les deux ellipsoïdes définis par les distances bistatiques des plots $P_1$ et $P_{réf}$ présentent une intersection.
   - un quatrième test (test D) consistant, si le test C est positif, à déterminer si les mesures des distances bistatiques associées aux plots $P_1$ et $P_{réf}$ sont compatible de la zone d'intersection des directions des azimuts des observations correspondant aux plots $P_1$ et $P_{réf}$ déterminée lors du test A;

   le test d'association étant positif si les résultats des quatre tests sont positifs.

7. Procédé selon la revendication 6, **caractérisé en ce que**, dans le cas où les plots $P_2$ et $P_{réf}$ sélectionnés par le module 34 ont pour origine des récepteurs $Rx_2$ et $Rx_{ref}$ distincts, le test d'association mis en oeuvre lors du second test (42) consiste à mettre en oeuvre consécutivement, sur les plots $P_2$ et $P_{réf}$, les quatre tests mis en oeuvre lors du premier test (41).

8. Procédé selon l'une des revendications 5 ou 6, **caractérisé en ce que** le troisième test (test C) est réalisé par la méthode du multiplicateur de Lagrange appliquée aux deux ellipsoïdes considérées.

9. Procédé selon l'une quelconque des revendications 3 à 8, **caractérisé en ce que**, dans le cas où les plots $P_1$ et $P_2$ sélectionnés par le module 34 ont un même récepteur Rx pour origine, le troisième test (43) de compatibilité des couples $(P_1, Tx_1)$ et $(P_2, Tx_2)$ est réalisé en mettant en oeuvre, sur les plots $P_1$ et $P_2$, des tests analogues à ceux mis en oeuvre lors du premier test (41) dans le cas où les plots $P_1$ et $P_{réf}$ sélectionnés par le module 34 ont un même récepteur pour origine.

10. Procédé selon l'une quelconque des revendications 3 à 8, **caractérisé en ce que**, dans le cas où les plots $P_1$ et $P_2$ sélectionnés par le module 34 ont pour origine des récepteurs $Rx_1$ et $Rx_2$ distincts, le troisième test (43) de compatibilité des couples $(P_1, Tx_1)$ et $(P_2, Tx_2)$ est réalisé en mettant en oeuvre, sur les plots $P_1$ et $P_2$, des tests analogues à ceux mis en oeuvre lors du premier test (41) dans le cas où les plots $P_1$ et $P_{réf}$ sélectionnés par le module 34 ont pour origine des récepteurs distincts.

11. Procédé selon l'une des revendications 1 à 10, **caractérisé en ce que** le second module (32) de formation de n-uplets de couples (plot, émetteur) comporte les étapes suivantes:,

   - une première étape (51) de formation de n-uplets par analyse des triplets validés (47) formés à partir d'un même couple de référence $(P_{réf}, Tx_{réf})$, l'analyse consistant à déterminer, en comparant tous les triplets formés, les couples $(P_i, Tx_j)$ pour lesquels les propriétés suivantes sont vérifiées pour tous les triplets simultanément:
   - le plot $P_i$ est toujours associé à un même émetteur $Tx_j$,
   - l'émetteur $Tx_j$ est toujours associé à un même plot $P_i$;
   les couples (plot, émetteur) vérifiant ces deux propriétés étant associés dans un même ensemble appelé n-uplet
   - une deuxième étape (52) de filtrage, appliquée aux n-uplets formés lors de la première étape (51) en fonction du nombre et de la nature des couples $(P_i, Tx_j)$ contenus dans ces n-uplets; les n-uplets formés comportant moins de trois couples ou les n-uplets ne comprenant pas le couple de référence $(P_{réf}, Tx_{réf})$ étant éliminés;
   - une troisième étape (53) ayant pour objet, pour chaque n-uplet non éliminé par la deuxième étape (52), de vérifier la cohérence du n-uplet, la vérification de cohérence consistant à déterminer, en utilisant les mesures de distance bistatique, de vitesse bistatique et d'azimut réalisées sur les observations radar correspondant aux plots formant le n-uplet, si les plots formant les couples du n-uplet correspondent de manière vraisemblable à une même cible;

- une quatrième étape (54) consistant à mémoriser les n-uplets ayant passé les étapes précédentes avec succès; les plots formant ces n-uplets constituant des paquets ou groupes de plots (35) destiné à l'initialisation de pistes cartésiennes.

**12.** Procédé selon la revendication 11, **caractérisé en ce que**, durant la troisième étape (53), on calcule d'abord la position cartésienne et la vitesse de la cible correspondant aux plots formant le n-uplet, puis on réalise la transposition des paramètres cartésiens de la cible ainsi déterminée en paramètre bistatiques relatifs aux différentes bases bistatiques ayant produit les plots considérés, puis encore à comparer les paramètres bistatiques ainsi déterminés à ceux des plots considérés.

**13.** Procédé d'initialisation de pistes cartésiennes (21) à partir de plots bistatiques correspondant à une même cible détectée par un système radar multistatique comportant une pluralité d'émetteurs et de récepteurs distants les uns des autres, un couple (émetteur, récepteur) formant une base bistatique du système, chaque plot bistatique $P_i$ correspondant à l'écho émis par un récepteur $Tx_j$ et reçu, après réflexion sur une cible, par un récepteur $E_k$ et étant **caractérisé par** l'émetteur $Tx_j$ ayant émis le signal dont il est l'écho; **caractérisé en ce qu'**il comporte:

- une étape préliminaire (22) mettant en oeuvre le procédé d'association de plots selon l'une quelconque des revendications 1 à 12 cette étape permettant de déterminer un n-uplet de plots susceptible de correspondre à une même piste;
- une étape (23) d'initialisation de pistes proprement dite, consistant à déterminer, à partir des paramètres des plots formant le n-uplet considéré, les paramètres de la cible correspondante.

**14.** procédé selon la revendication 13, **caractérisé en ce que** l'étape d'initialisation de piste (23) comporte les sous-étapes suivantes:

- une première sous-étape durant laquelle on réalise une première estimation grossière de la position de la cible, cette première estimation étant réalisée par mise en oeuvre de l'algorithme du gradient;
- une deuxième sous-étape durant laquelle on réalise un calcul d'intersection exhaustif permettant de déterminer, à partir des mesures des distances bistatiques des plots considérés et de la précision de ces distances, ainsi que des positions du récepteur et des émetteurs considérés, la position de la cible ainsi qu'une estimation de la matrice de covariance associée à cette position.
- d'une troisième sous-étape durant laquelle on calcule la vitesse de la cible;
- d'une quatrième sous-étape durant laquelle on estime la matrice de covariance initiale C de l'état de la cible à partir des bornes de Cramer Rao déterminées grâce aux précisions des mesures en distance bistatique, vitesse bistatique et azimut.
- d'une cinquième sous-étape durant laquelle la nouvelle piste est construite en associant tous les attributs qui la caractérisent.

**15.** Procédé d'initialisation de pistes cartésiennes (61) selon l'une quelconque des revendications 13 ou 14, **caractérisé en ce qu'**il comporte en outre une étape complémentaire (62), préalable à l'étape préliminaire (22), consistant à réaliser une première association en deux dimensions des plots bistatiques formés par le système, l'analyse de la compatibilité des plots considérés étant réalisée en ne tenant pas compte de l'altitude des observations correspondant à ces plots, ni des altitudes relatives des émetteurs et des récepteurs constituant le système; les plots bistatiques associés au cours de cette étape complémentaire (62) étant directement transmis à l'étape (23) d'initialisation de pistes, l'étape préliminaire (22) réalisant l'association en trois dimensions des seuls plots non associés par l'étape (62) d'association en deux dimensions.

**16.** Procédé d'initialisation de pistes radar fusionnées (71), associant des pistes cartésiennes externes à des piste cartésiennes formées à partir des plots bistatiques produits par un système radar multistatique comportant une pluralité d'émetteurs et de récepteurs distants les uns des autres, un couple (émetteur, récepteur) formant une base bistatique du système, chaque plot bistatique $P_i$ correspondant à l'écho émis par un récepteur $Tx_j$ et reçu par un récepteur $E_k$ et étant **caractérisé par** l'émetteur $Tx_j$ ayant émis le signal dont il est l'écho; **caractérisé en ce qu'**il associe le procédé d'initialisation (21, 61) de pistes cartésiennes selon l'une quelconque des revendications 13 à 15 à un traitement d'association complémentaire comportant deux étapes:

- une première étape (72) qui procède à l'association des pistes cartésiennes externes (74) pour construire des pistes externes fusionnées dont les attributs sont fonctions des attributs de pistes cartésiennes externes à l'origine de la fusion;

- une deuxième étape (73) qui a pour fonction de tenter l'association de plots radar bistatiques libres, non encore associés pour initialiser des pistes cartésiennes radar, à des pistes cartésiennes fusionnées externes formées au cours de l'étape précédente (72).

**Patentansprüche**

1. Verfahren (22) zum Realisieren der Assoziation von bistatischen Punkten entsprechend einem selben Ziel, das von einem multistatischen Radarsystem erkannt wird, das Folgendes umfasst: mehrere voneinander beabstandete Sender und Empfänger, wobei ein Paar (Sender, Empfänger) eine bistatische Basis des Systems bildet, wobei jeder bistatische Punkt $P_i$ einem Echo entspricht, das von dem von einem Sender $Tx_j$ emittierten und von einem Empfänger $E_k$ empfangenen Signal kommt, wobei jeder bistatische Punkt $P_i$ **dadurch gekennzeichnet ist, dass** das Signal von dem Sender $Tx_j$ ausgesendet wurde, von dem es das Echo ist, wobei die gebildeten bistatischen Punkte mit unterschiedlichen Sendern des Systems assoziiert sind, um einen Satz von Paaren (Punkt, Sender) zu bilden, wobei das Verfahren **dadurch gekennzeichnet ist, dass** es Folgendes beinhaltet:

   - ein erstes Modul (31) zum Bilden von Tripletts von Paaren (Pi, $Tx_j$), wobei diese Tripletts Paare (Punkt, Sender) gruppieren, die eine Abstands- und Geschwindigkeitskompatibilität aufweisen;
   - ein zweites Modul (32) zum Bilden von n-Tupeln von Paaren (Pi, $Tx_j$), wobei diese n-Tupel im vorherigen Schritt gebildete Tripletts, entsprechend gegebenen Gruppierungskriterien gruppieren, die die Wahrscheinlichkeit einer Zuordnung von unterschiedlichen Tripletts zu einem selben Ziel charakterisieren;

   wobei die so gebildeten n-Tupel Punktpakete (35) bilden, die ein selbes Ziel definieren.

2. Verfahren nach Anspruch 1, **dadurch gekennzeichnet, dass** der erste Schritt (31) des Bildens von Tripletts von Paaren (Punkt, Sender) ein iterativer Schritt ist, der bei jeder Iteration drei Paare (Punkt, Sender) berücksichtigt, ein erstes Paar ($P_1$, $Tx_1$), ein zweites Paar ($P_2$, $Tx_2$) und ein drittes Paar ($P_{Ref}$, $Tx_{Ref}$), das als Referenzpaar genommen wird und das einen Assoziationsvorgang darauf anwendet, der die Möglichkeit des Assoziierens des ersten Paares ($P_1$, $Tx_1$) und des zweiten Paares ($P_2$, $Tx_2$) mit dem Referenzpaar ($P_{Ref}$, $Tx_{Ref}$) testet, wobei ein Paar (Punkt, Sender) mit dem Referenzpaar assoziiert werden kann, wenn die Charakteristiken des Ziels entsprechend dem betrachteten Punkt mit den Charakteristiken des Ziels entsprechend dem das Referenzpaar bildenden Punkt kompatibel sind; wobei drei Paare ($P_{Ref}$, $Tx_{Ref}$), ($P_i$, $Tx_1$) und ($P_2$, $Tx_2$), die den Assoziationstest erfolgreich abschließen, ein Triplett von Paaren (47) bilden.

3. Verfahren nach Anspruch 2, **dadurch gekennzeichnet, dass** der erste Schritt des Bildens von Tripletts von Paaren (Punkt, Sender) wiederum die folgenden Vorgänge beinhaltet:

   - einen ersten Assoziationstest (41) zum Bestimmen, ob die Paare ($P_{Ref}$, $Tx_{Ref}$) und ($P_1$, $Tx_1$) assoziiert werden können;
   - einen zweiten Assoziationstest (42) zum Bestimmen, ob die Paare ($P_{Ref}$, $Tx_{Ref}$) und ($P_2$, $Tx_2$) assoziiert werden können;
   - einen dritten Kompatibilitätstest (43) von den Paaren ($P_i$, $Tx_1$) und ($P_2$, $Tx_2$);
   - einen vierten Kompatibilitätstest (44) der bistatischen Distanzen von Punkten;
   - einen fünften Test (45) zum Testen der Wahrscheinlichkeit, dass die kartesische Geschwindigkeit des Ziels den assoziierten Punkten entspricht;
   - einen sechsten Vorgang (46) zum Speichern von Tripletts (47), die von Paaren ($P_i$, $Tx_1$) und ($P_2$, $Tx_2$) gebildet werden, die alle Tests erfolgreich abgeschlossen haben;

   wobei der beim ersten Test (41) ausgeführte Assoziationstest mit dem beim zweiten Test (42) ausgeführten identisch ist.

4. Verfahren nach Anspruch 3, **dadurch gekennzeichnet, dass** in dem Fall, in dem die von dem Modul 34 gewählten Punkte $P_1$ und $P_{Ref}$ denselben Empfänger Rx zum Ursprung haben, der beim ersten Test (41) durchgeführte Assoziationstest im Durchführen der folgenden vier unabhängigen Tests besteht:

   - einem ersten Test (Test 1), der darin besteht zu bestimmen, ob die bistatischen Geschwindigkeiten $Vb_k(P_1)$ und $Vb_k(P_{Ref})$ der Punkte $P_1$ und $P_{Ref}$ einer selben Zielgeschwindigkeit entsprechen können, wobei der erste Test negativ ist, wenn:

$$\left| Vb_k(P_{r\acute{e}f}) - Vb_k(P_1) \right| > 2.V_{max}$$

wobei $V_{max}$ die maximale Geschwindigkeit der Ziele repräsentiert, die erkannt werden sollen;

- einem zweiten Test (Test 2), der darin besteht zu bestimmen, ob die Werte der mit den Punkten $P_1$ und $P_{Ref}$ assoziierten Azimuts einem selben Ziel entsprechen können, unter Berücksichtigung der Präzisionen $\sigma_{\theta k}(P_1)$ und $\sigma_{\theta k}(P_{Ref})$ von durchgeführten Azimutmessungen; wobei der zweite Test negativ ist, wenn:

$$\left| \theta_k(P_{r\acute{e}f}) - \theta_k(P_1) \right| > 3.\sqrt{\sigma_{\theta_k}^2(P_{r\acute{e}f}) + \sigma_{\theta_k}^2(P_1)} ;$$

- einem dritten Test (Test 3), der darin besteht zu bestimmen, ob die den bistatischen Distanzen der Punkte $P_1$ und $P_{Ref}$ entsprechenden Ellipsoide Schnittpunkte aufweisen, wobei der dritte Test negativ ist, wenn:

$$\left( Db_k(P_{r\acute{e}f}) - Db_k(P_1) \right)^2 - \left\| \vec{x}_{Txr\acute{e}f} - \vec{x}_{Tx1} \right\|^2 > 0 ,$$

wobei

$$\vec{x}_{Tx1} = \begin{bmatrix} x_{Tx1} & y_{Tx1} & z_{Tx1} \end{bmatrix}^T \text{ und } \vec{x}_{Txr\acute{e}f} = \begin{bmatrix} x_{Txr\acute{e}f} & y_{Txr\acute{e}f} & z_{Txr\acute{e}f} \end{bmatrix}^T$$

hier jeweils der kartesischen Position des Senders $Tx_1$ in Assoziation mit $P_1$ und der kartesischen Position des Senders $Tx_{Ref}$ in Assoziation mit $P_{Ref}$ entsprechen;

- einem vierten Test (Test 4), der darin besteht zu bestimmen, ob die Schnittpunkte von auf der Basis von bistatischen Distanzen, die die Punkte $P_1$ und $P_{Ref}$ charakterisieren, konstruierten Ellipsoiden mit Azimutmessungen in Bezug auf diese Punkte kompatibel sind, wobei der vierte Test negativ ist, wenn:

$$\left] \cos\varphi - 3.\sigma_{\cos\varphi}, \overline{\cos\varphi} + 3.\sigma_{\cos\varphi} \right] \cap [0,1] \neq \varnothing ,$$

wobei $\varphi$ dem Ort entspricht, gemäß dem das potentielle Ziel, das den betrachteten Punkten entspricht, beobachtet werden kann, und $\sigma_{\cos\varphi}$ die Unsicherheit bedeutet, die die Bestimmung von $\cos\varphi$ beeinflusst;
wobei der Assoziationstest positiv ist, wenn die Ergebnisse der vier Tests positiv sind.

5. Verfahren nach Anspruch 4, **dadurch gekennzeichnet, dass** in dem Fall, in dem die von dem Modul 34 gewählten Punkte $P_2$ und $P_{Ref}$ einen selben Empfänger Rx zum Ursprung haben, der beim zweiten Test (42) durchgeführte Assoziationstest darin besteht, an den Punkten $P_2$ und $P_{Ref}$ die beim ersten Test durchgeführten vier unabhängigen Tests durchzuführen.

6. Verfahren nach Anspruch 3, **dadurch gekennzeichnet, dass** in dem Fall, in dem die von dem Modul 34 gewählten Punkte $P_1$ und $P_{Ref}$ separate Empfänger $Rx_1$ und $Rx_{Ref}$ zum Ursprung haben, der im ersten Test (41) durchgeführte Assoziationstest darin besteht, nacheinander die folgenden vier Tests durchzuführen:

- einen ersten Test (Test A), der darin besteht zu bestimmen, ob es möglich ist, innerhalb der Reichweite des betrachteten Erkennungssystems einen Schnittpunkt von Richtungen von Beobachtungsazimuts zu definieren, die den Punkten $P_1$ und $P_{Ref}$ entsprechen; und wenn ja, diesen Schnittpunkt unter Berücksichtigung der Unsicherheiten der Azimutmessungen durchzuführen, so dass eine Schnittfläche definiert wird;
- einen zweiten Test (Test B), der darin besteht zu bestimmen, wenn Test A positiv ist, ob die beiden Kugeln, die die von den bistatischen Distanzen der Punkte $P_1$ und $P_{Ref}$ definierten Ellipsoide enthalten, einen Schnittpunkt aufweisen;
- einen dritten Test (Test C), der darin besteht zu bestimmen, wenn Test B positiv ist, ob die beiden von den bistatischen Distanzen der Punkte $P_1$ und $P_{Ref}$ definierten Ellipsoide einen Schnittpunkt aufweisen;
- einen vierten Test (Test D), der darin besteht zu bestimmen, wenn Test C positiv ist, ob die mit den Punkten $P_1$ und $P_{Ref}$ assoziierten bistatischen Distanzmesswerte mit der Schnittzone der Richtungen der Beobachtungsazimuts kompatibel sind, die den in Test A bestimmten Punkten $P_1$ und $P_{Ref}$ entsprechen;

wobei der Assoziationstest positiv ist, wenn die Ergebnisse der vier Tests positiv sind.

**7.** Verfahren nach Anspruch 6, **dadurch gekennzeichnet, dass** in dem Fall, in dem die vom Modul 34 gewählten Punkte $P_2$ und $P_{Ref}$ separate Empfänger $Rx_2$ und $Rx_{Ref}$ zum Ursprung haben, der beim zweiten Test (42) durchgeführte Assoziationstest darin besteht, an den Punkten $P_2$ und $P_{Ref}$ die beim ersten Test (41) durchgeführten vier Tests nacheinander durchzuführen.

**8.** Verfahren nach Anspruch 5 oder 6, **dadurch gekennzeichnet, dass** der dritte Test (Test C) mit dem Lagrange-Multiplikationsverfahren realisiert wird, das auf die beiden betrachteten Ellipsoide angewandt wird.

**9.** Verfahren nach einem der Ansprüche 3 bis 8, **dadurch gekennzeichnet, dass** in dem Fall, in dem die vom Modul 34 gewählten Punkte $P_1$ und $P_2$ einen selben Empfänger Rx zum Ursprung haben, der dritte Kompatibilitätstest (43) für die Paare $(P_1, Tx_1)$ und $(P_2, Tx_2)$ realisiert wird, indem an den Punkten $P_1$ und $P_2$ Tests durchgeführt werden, die zu denen beim ersten Test (41) analog sind, in dem Fall, in dem die vom Modul 34 gewählten Punkte $P_1$ und $P_{Ref}$ einen selben Empfänger zum Ursprung haben.

**10.** Verfahren nach einem der Ansprüche 3 bis 8, **dadurch gekennzeichnet, dass** in dem Fall, in dem die vom Modul 34 gewählten Punkte $P_1$ und $P_2$ separate Empfänger $Rx_1$ und $Rx_2$ zum Ursprung haben, der dritte Kompatibilitätstest (43) für Paare $(P_1, Tx_1)$ und $(P_2, Tx_2)$ realisiert wird, indem an den Punkten $P_1$ und $P_2$ Tests durchgeführt werden, die zu denen analog sind, die beim ersten Test (41) in dem Fall durchgeführt wurden, in dem die vom Modul 34 gewählten Punkte $P_1$ und $P_{Ref}$ separate Empfänger zum Ursprung haben.

**11.** Verfahren nach einem der Ansprüche 1 bis 10, **dadurch gekennzeichnet, dass** das zweite Modul (32) zum Bilden von n-Tupeln von Paaren (Punkt, Sender) die folgenden Schritte beinhaltet:

- einen ersten Schritt (51) des Bildens von n-Tupeln durch Analysieren von validierten Tripletts (47), gebildet auf der Basis eines selben Referenzpaares $(P_{Ref}, Tx_{Ref})$, wobei die Analyse darin besteht, durch Vergleichen aller gebildeten Tripletts die Paare $(P_1, Tx_j)$ zu bestimmen, für die die folgenden Eigenschaften für alle Tripletts gleichzeitig verifiziert werden:

- der Punkt $P_1$ ist immer mit einem selben Sender $Tx_j$ assoziiert;
- der Sender $Tx_j$ ist immer mit einem selben Punkt $P_i$ assoziiert;
- die diese beiden Eigenschaften verifizierenden Paare (Punkt, Sender) sind in einem selben Satz, n-Tupel genannt, assoziiert,
- einen zweiten Filterschritt (52), angewendet auf die im ersten Schritt (51) gebildeten n-Tupel, in Abhängigkeit von der Zahl und der Natur der in diesen n-Tupeln enthaltenen Paare $(P_1, Tx_j)$; wobei die gebildeten n-Tupel weniger als drei Paare umfassen oder die n-Tupel, die das Referenzpaar $(P_{Ref}, Tx_{Ref})$ nicht enthalten, eliminiert werden;
- einen dritten Schritt (53) mit der Aufgabe, für jedes im zweiten Schritt (52) nicht eliminierte n-Tupel die Kohärenz des n-Tupels zu verifizieren, wobei die Verifikation der Kohärenz darin besteht, anhand der bistatischen Distanzmesswerte die bistatische Geschwindigkeit und den Azimut zu bestimmen, realisiert an den Beobachtungsradars entsprechend den das n-Tupel bildenden Punkten, wenn die die Paare des n-Tupels bildenden Punkte wahrscheinlich einem selben Ziel entsprechen;
- einen vierten Schritt (54), der darin besteht, die n-Tupel zu speichern, die die vorherigen Schritte erfolgreich durchlaufen haben; wobei die diese n-Tupel bildenden Punkte Pakete oder Gruppen von Punkten (35) bilden, die für die Initialisierung von kartesischen Bahnen bestimmt sind.

**12.** Verfahren nach Anspruch 11, **dadurch gekennzeichnet, dass** im dritten Schritt (53) zunächst die kartesische Position und die Geschwindigkeit des Ziels entsprechend den das n-Tupel bildenden Punkten berechnet werden, dann die Transposition der kartesischen Parameter des so bestimmten Ziels in bistatische Parameter relativ zu den unterschiedlichen bistatischen Basen realisiert wird, die die betrachteten Punkte produziert haben, dann die so bestimmten bistatischen Parameter mit denen der betrachteten Punkte verglichen werden.

**13.** Verfahren zum Initialisieren von kartesischen Bahnen (21) auf der Basis von bistatischen Punkten, die einem selben Ziel entsprechen, das von einem multistatischen Radarsystem erkannt wird, umfassend mehrere voneinander beabstandete Sender und Empfänger, wobei ein Paar (Sender, Empfänger) eine bistatische Basis des Systems bildet, wobei jeder bistatische Punkt $P_1$ dem Echo entspricht, das von einem Empfänger $Tx_j$ ausgesendet und nach der Reflexion an einem Ziel von einem Empfänger $E_k$ empfangen wird und **dadurch gekennzeichnet ist, dass** das Signal von dem Sender $Tx_j$ ausgesendet wurde, von dem es ein Echo ist; **dadurch gekennzeichnet, dass** es Folgendes beinhaltet:

- einen Vorabschritt (22) des Ausführens des Verfahrens zum Assoziieren von Punkten nach einem der Ansprüche 1 bis 12, wobei dieser Schritt die Bestimmung eines n-Tupels von Punkten zulässt, die dazu neigen, einer selben Bahn zu entsprechen;
- einen eigentlichen Bahninitialisierungsschritt (23), der darin besteht, auf der Basis von Parametern von das betrachtete n-Tupel bildenden Punkten die Parameter des entsprechenden Ziels zu bestimmen.

14. Verfahren nach Anspruch 13, **dadurch gekennzeichnet, dass** der Bahninitialisierungsschritt (23) die folgenden Unterschritte beinhaltet:

- einen ersten Unterschritt, in dem eine erste grobe Schätzung der Position des Ziels erfolgt, wobei diese erste Schätzung durch Ausführen des Gradientenalgorithmus realisiert wird;
- einen zweiten Unterschritt, in dem eine erschöpfende Schnittpunktberechnung erfolgt, die es zulässt, auf der Basis von bistatischen Distanzmessungen der betrachteten Punkte und der Präzision dieser Distanzen sowie der Positionen des Empfängers und der betrachteten Sender die Position des Ziels sowie eine Schätzung der mit dieser Position assoziierten Kovarianzmatrix zu bestimmen;
- einen dritten Unterschritt, in dem die Geschwindigkeit des Ziels berechnet wird;
- einen vierten Unterschritt, in dem die anfängliche Kovarianzmatrix C des Zustands des Ziels auf der Basis von Cramer-Rao-Anschlüssen geschätzt wird, ermittelt dank der Präzisionen von Messungen von bistatischer Distanz, bistatischer Geschwindigkeit und Azimut;
- einen fünften Unterschritt, in dem die neue Bahn durch Assoziieren aller sie charakterisierenden Attribute konstruiert wird.

15. Verfahren zum Initialisieren von kartesischen Bahnen (61) nach Anspruch 13 oder 14, **dadurch gekennzeichnet, dass** es ferner einen Zusatzschritt (62) vor dem Vorabschritt (22) beinhaltet, der darin besteht, eine erste Assoziation in zwei Dimensionen von von dem System gebildeten bistatischen Punkten zu realisieren, wobei die Analyse der Kompatibilität der betrachteten Punkte ohne Berücksichtigung der Beobachtungshöhe entsprechend diesen Punkten oder der Höhen relativ zu den das System bildenden Sendern und Empfängern realisiert wird; wobei die im Laufe dieses Zusatzschritts (62) assoziierten bistatischen Punkte direkt im Bahninitialisierungsschritt (23) übertragen werden, wobei der Vorabschritt (22) die Assoziation in drei Dimensionen nur derjenigen Punkte realisiert, die im Assoziationsschritt (62) nicht in zwei Dimensionen assoziiert wurden.

16. Verfahren zum Initialisieren von fusionierten Radarbahnen (71), das externe kartesische Bahnen mit kartesischen Bahnen assoziiert, die auf der Basis von bistatischen Punkten gebildet werden, produziert durch ein multistatisches Radarsystem, das mehrere voneinander beabstandete Sender und Empfänger umfasst, wobei ein Paar (Sender, Empfänger) eine bistatische Basis des Systems bildet, wobei jeder bistatische Punkten $P_i$ dem von einem Empfänger $Tx_j$ ausgesendeten und von einem Empfänger $E_k$ empfangenen Echo entspricht und **dadurch gekennzeichnet ist, dass** das Signal von dem Sender $Tx_j$ ausgesendet wurde, von dem es ein Echo ist; **dadurch gekennzeichnet, dass** es das kartesische Bahninitialisierungsverfahren (21, 61) nach einem der Ansprüche 13 bis 15 mit einer zusätzlichen Assoziationsverarbeitung assoziiert, die zwei Schritte beinhaltet:

- einen ersten Schritt (72), der zur Assoziation von externen kartesischen Bahnen (74) übergeht, um fusionierte externe Bahnen zu konstruieren, deren Attribute von den Attributen von externen kartesischen Bahnen am Ursprung der Fusion abhängig sind;
- einen zweiten Schritt (73), dessen Funktion darin besteht, die Assoziation von freien bistatischen Radarpunkten, die noch nicht zum Initialisieren von kartesischen Radarbahnen assoziiert sind, mit externen fusionierten kartesischen Bahnen zu versuchen, die im Laufe des vorherigen Schritts (72) gebildet wurden.

## Claims

1. Method (22) for carrying out the association of bistatic blips corresponding to the same target detected by a multistatic radar system comprising a plurality of transmitters and receivers which are remote from each other, a pair (transmitter/receiver) forming a bistatic base of the system, each bistatic blip $P_i$ corresponding to the echo originating from the signal transmitted by an transmitter $Tx_j$ and received by a receiver $E_k$, each bistatic blip $P_i$ being **characterised by** the transmitter $Tx_j$ having transmitted the signal of which it is the echo, the bistatic blips formed being associated with the different transmitters of the system in order to form a set of pairs (blip,transmitter),
the method being **characterised in that** it comprises:

- a first module (31) for forming triplets of pairs ($P_i$, $Tx_j$), those triplets combining pairs (blip,transmitter) which have a compatibility in terms of distance and speed;
- a second module (32) for forming n-tuples of pairs (pairs ($P_i$, $Tx_j$), those n-tuples combining triplets which are formed in the preceding step and meeting given combination criteria which characterise the probability of the assignment of the different triplets to the same target;

the n-tuples constituted in this manner forming packets of blips (35) which define the same target.

2. Method according to claim 1, **characterised in that** the first step (31) of forming triplets of pairs (blip, transmitter) is an iterative step which considers for each iteration three pairs (blip, transmitter), a first pair ($P_1$, $Tx_1$), a second pair ($P_2$, $Tx_2$) and a third pair ($P_{ref}$, $Tx_{ref}$) taken as a reference pair and which applies to them an association operation which tests the possibility of associating the first pair ($P_1$, $Tx_1$) and the second pair ($P_2$, $Tx_2$) with the reference pair ($P_{ref}$, $Tx_{ref}$), a pair (blip, transmitter) being able to be associated with the reference pair if the characteristics of the target corresponding to the blip being considered are compatible with the characteristics of the target corresponding to the blip forming the reference pair; three pairs ($P_{ref}$, $Tx_{ref}$), ($P_1$, $Tx_1$) and ($P_2$, $Tx_2$), for which the association test is successful forming a triplet of pairs (47).

3. Method according to claim 2, **characterised in that** the first step of forming triplets of pairs (blip, transmitter) itself comprises the following operations:

- a first association test (41) in order to establish whether the pairs ($P_{ref}$, $Tx_{ref}$) and ($P_1$, $Tx_1$) can be associated;
- a second association test (42) in order to establish whether the pairs ($P_{ref}$, $Tx_{ref}$) and ($P_2$, $Tx_2$) can be associated;
- a third compatibility test (43) of the pairs ($P_1$, $Tx_1$) and ($P_2$, $Tx_2$);
- a fourth compatibility test (44) of the bistatic distances of the blips;
- a fifth test (45) for testing the likelihood of the Cartesian speed of the target corresponding to the associated blips;
- a sixth operation (46) for storing the triplets (47) which are formed by pairs ($P_1$, $Tx_1$) and ($P_2$, $Tx_2$) which have successfully passed all the tests;

the association test carried out during the first test (41) being identical to the one implemented during the second test (42).

4. Method according to claim 3, **characterised in that**, if the blips $P_1$ and $P_{ref}$ which are selected by the module 34 have the same receiver Rx as the origin, the association test implemented during the first test (41) involves implementing the four following independent tests:

- a first test (test 1) involving establishing whether the bistatic speeds $Vb_k(P_1)$ and $Vb_k(P_{ref})$ of the blips $P_1$ and $P_{ref}$ can correspond to the same target speed, the first test being negative if there is obtained:

$$\left| Vb_k(P_{réf}) - Vb_k(P_1) \right| > 2.V_{max}$$

where $V_{max}$ represents the maximum speed of the targets which it is desirable to detect;
- a second test (test 2) involving establishing whether the values of the azimuths associated with the blips $P_1$ and $P_{ref}$ can correspond to the same target, taking into account the specifications $\sigma_{\theta k}(P_1)$ and $\sigma_{\theta k}(P_{ref})$ of the azimuth measurements implemented; the second test being negative if there is obtained:

$$\left| \theta_k(P_{réf}) - \theta_k(P_1) \right| > 3.\sqrt{\sigma_{\theta_k}^2(P_{réf}) + \sigma_{\theta_k}^2(P_1)} \; ;$$

- a third test (test 3) involving establishing whether the ellipsoids corresponding to the bistatic distances of the blips $P_1$ and $P_{ref}$ have intersections, the third test being negative if there is obtained:

$$\left(Db_k(P_{réf}) - Db_k(P_1)\right)^2 - \left\|\vec{x}_{Txréf} - \vec{x}_{Tx1}\right\|^2 > 0,$$

where $\vec{x}_{TX1} = [x_{Tx1} \ y_{Tx1} \ z_{Tx1}]^T$ and $\vec{x}_{Txref} = [x_{Txref} \ y_{Txref} \ z_{Txref}]^T$ correspond here to the Cartesian position of the transmitter $Tx_1$ associated with $P_1$ and the Cartesian position of the transmitter $Tx_{ref}$ associated with $P_{ref}$, respectively;
- a fourth test (test 4) involving establishing whether the intersections of the ellipsoids constructed on the basis of the bistatic distances which characterise the blips $P_1$ and $P_{ref}$ are compatible with the azimuth measurements relating to those blips, the fourth test being negative if there is obtained:

$$\left[\cos\varphi - 3.\sigma'_{\cos\varphi}, \cos'\varphi + 3.\sigma_{\cos\varphi}\right] \cap [0,1] \neq \varnothing,$$

where $\varphi$ corresponds to the site according to which the potential target corresponding to the blips being considered can be observed and $\sigma_{\cos\varphi}$ is the uncertainty affecting the establishment of $\cos\varphi$;
the association test being positive if the results of the four tests are positive.

5. Method according to claim 4, **characterised in that**, if the blips $P_2$ and $P_{ref}$ selected by the module 34 have the same receiver Rx as the origin, the association test implemented during the second test (42) involves implementing, at the blips $P_2$ and $P_{ref}$, the four independent tests implemented during the first test.

6. Method according to claim 3, **characterised in that**, if the blips $P_1$ and $P_{ref}$ selected by the module 34 have different receivers $Rx_1$ and $Rx_{ref}$ as the origin, the association test implemented during the first test (41) involves consecutively implementing the four following tests:

   - a first test (test A) which involves establishing whether it is possible to define, within the scope of the detection system being considered, an intersection of the directions of the azimuths of the observations corresponding to the blips $P_1$ and $P_{ref}$; and, if so, calculating that intersection, taking into account the uncertainties of the measurements of the azimuths so that an intersection area is defined;
   - a second test (test B) involving, if the test A is positive, establishing whether the two spheres containing the ellipsoids defined by the bistatic distances of the blips $P_1$ and $P_{ref}$ have an intersection;
   - a third test (test C) involving, if the test B is positive, establishing whether the two ellipsoids defined by the bistatic distances of the blips $P_1$ and $P_{ref}$ have an intersection;
   - a fourth test (test D) involving, if the test C is positive, establishing whether the measurements of the bistatic distances associated with the blips $P_1$ and $P_{ref}$ are compatible with the intersection zone of the directions of the azimuths of the observations corresponding to the blips $P_1$ and $P_{ref}$ established during the test A;

   the association test being positive if the results of the four tests are positive.

7. Method according to claim 6, **characterised in that**, if the blips $P_2$ and $P_{ref}$ selected by the module 34 have different receivers $Rx_2$ and $Rx_{ref}$ as the origin, the association test implemented during the second test (42) involves consecutively implementing, on the blips $P_2$ and $P_{ref}$, the four tests carried out during the first test (41).

8. Method according to either claim 5 or claim 6, **characterised in that** the third test (test C) is implemented by the method of the Lagrange multiplier applied to the two ellipsoids being considered.

9. Method according to any one of claims 3 to 8, **characterised in that**, if the blips $P_1$ and $P_2$ selected by the module 34 have the same receiver Rx as the origin, the third compatibility test (43) of the pairs ($P_1$, $Tx_1$) and ($P_2$, $Tx_2$) is implemented by implementing, on the blips $P_1$ and $P_2$, similar tests to those implemented during the first test (41) if the blips $P_1$ and $P_{ref}$ selected by the module 34 have the same receiver as the origin.

10. Method according to any one of claims 3 to 8, **characterised in that**, if the blips $P_1$ and $P_2$ selected by the module 34 have different receivers $Rx_1$ and $Rx_2$ as the origin, the third compatibility test (43) of the pairs ($P_1$, $Tx_1$) and ($P_2$, $Tx_2$) is implemented by implementing, on the blips $P_1$ and $P_2$, similar tests to those implemented during the first test (41) if the blips $P_1$ and $P_{ref}$ selected by the module 34 have different receivers as the origin.

**11.** Method according to any one of claims 1 to 10, **characterised in that** the second module (32) for forming n-tuples of pairs (blip, transmitter) comprises the following steps:

- a first step (51) for forming n-tuples by analysis of the validated triplets (47) which are formed from the same reference pair ($P_{ref}$, $Tx_{ref}$), the analysis involving establishing, by comparing all the triplets formed, the pairs ($P_i$, $Tx_j$) for which the following properties are verified for all the triplets simultaneously:
- the blip $P_i$ is always associated with the same transmitter $Tx_j$,
- the transmitter $Tx_j$ is always associated with the same blip $P_i$;
the pairs (blip, transmitter) verifying those two properties being associated in the same set called an n-tuple,
- a second filtering step (52) which is applied to the n-tuples which are formed during the first step (51) as a function of the number and nature of the pairs ($P_i$, $Tx_j$) which are contained in those n-tuples; the n-tuples which are formed comprising less than three pairs or the n-tuples not comprising the reference pair ($P_{ref}$, $Tx_{ref}$) being eliminated;
- a third step (53) serving, for each n-tuple which is not eliminated by the second step (52), to verify the coherence of the n-tuple, the coherence verification involving establishing, using the bistatic distance measurements, the bistatic speed and azimuth made on the radar observations corresponding to the blips forming the n-tuple, if the blips forming the pairs of the n-tuple correspond to the same target in a probable manner;
- a fourth step (54) involving storing the n-tuples which have successfully passed the preceding steps; the blips forming those n-tuples constituting packets or groups of blips (35) which are intended for initialising Cartesian tracks.

**12.** Method according to claim 11, **characterised in that**, during the third step (53), there is first calculated the Cartesian position and the speed of the target corresponding to the blips forming the n-tuple, then the transposition of the Cartesian parameters of the target established in this manner is brought about as bistatic parameters relating to the different bistatic bases which produced the blips being considered, then the bistatic parameters established in this manner are compared with those of the blips being considered.

**13.** Method (21) for initialising Cartesian tracks on the basis of bistatic blips corresponding to the same target detected by a multistatic radar system comprising a plurality of transmitters and receivers which are spaced apart from each other, a pair (transmitter, receiver) forming a bistatic base of the system, each bistatic blip $P_i$ corresponding to the echo which is transmitted by a receiver $Tx_j$ and which is received, after reflection on a target, by a receiver $E_k$ and being **characterised by** the transmitter $Tx_j$ having transmitted the signal of which it is the echo; **characterised in that** it comprises:

- a preliminary step (22) which implementing the blip association method according to any one of claims 1 to 12, this step allowing establishment of an n-tuple of blips which are capable of corresponding to the same track;
- an actual track initialising step (23), involving the establishment, on the basis of the parameters of the blips forming the n-tuple being considered, of the parameters of the corresponding target.

**14.** Method according to claim 13, **characterised in that** the track initialising step (23) comprises the following sub-steps:

- a first sub-step during which a first rough estimate of the position of the target is made, that first estimate being performed by implementing the algorithm of the gradient;
- a second sub-step during which an exhaustive intersection calculation is made which allows the establishment, on the basis of the measurements of the bistatic distances of the blips being considered and the specification of those distances, and the positions of the receiver and the transmitters being considered, of the position of the target and an estimate of the co-variance matrix associated with that position;
- a third sub-step during which the speed of the target is calculated;
- a fourth sub-step during which the initial co-variance matrix C of the state of the target is estimated on the basis of the Cramer Rao bounds which are established as a result of the specifications of the measurements in terms of bistatic distance, bistatic speed and azimuth;
- a fifth sub-step during which the new track is constructed by associating all the attributes which characterise it.

**15.** Method (61) for initialising Cartesian tracks according to either claim 13 or claim 14, **characterised in that** it further comprises a supplementary step (62), prior to the preliminary step (22), involving bringing about a first association in two dimensions of the bistatic blips which are formed by the system, the analysis of the compatibility of the blips being considered being performed by not taking into account the altitude of the observations corresponding to those blips, or the relative altitudes of the transmitters and receivers constituting the system; the bistatic blips associated during that supplementary step (62) being directly transmitted at the track initialisation step (23), the preliminary step (22) bringing about the association in three dimensions of the only blips which are not associated by the step (62) for association in two dimensions.

16. Method for initialisation of merged radar tracks (71), associating external Cartesian tracks with Cartesian tracks which are formed on the basis of the bistatic blips produced by a multistatic radar system comprising a plurality of transmitters and receivers which are spaced apart from each other, a pair (transmitter, receiver) forming a bistatic base of the system, each bistatic blip $P_i$ corresponding to the echo which is transmitted by a receiver $Tx_j$ and which is received by a receiver $E_k$ and being **characterised by** the transmitter $Tx_j$ having transmitted the signal of which it is the echo;
**characterised in that** it associates the method (21, 61) for initialisation of Cartesian tracks according to any one of claims 13 to 15 with a supplementary association processing comprising two steps:

- a first step (72) which proceeds with the association of external Cartesian tracks (74) in order to construct merged external tracks of which the attributes are a function of the attributes of external Cartesian tracks at the origin of the merging;
- a second step (73) which serves to attempt to associate free bistatic radar blips which are not yet associated in order to initialise radar Cartesian tracks with external merged Cartesian tracks which are formed during the preceding step (72).

Fig. 1

**Fig. 2**

**Fig. 6**

EP 2 565 670 B1

Fig. 3

34

Gestion des couples
$(P_i, Tx_i)$

$(P_2, Tx_2)$

$(P_1, Tx_1)$

$(P_{réf}, Tx_{réf})$

$(P_{réf}, Tx_{réf})$

Test d'association de
$(P_1, Tx_1)$ et $(P_{réf}, Tx_{réf})$

OK

Test d'association de
$(P_2, Tx_2)$ et $(P_{réf}, Tx_{réf})$

$(P_1, Tx_1)$

43

41

42

OK

$(P_2, Tx_2)$

Compatibilité
$(P_1, Tx_1)$ et $(P_2, Tx_2)$

44

OK

Compatibilité des
distances bistatiques?

45

OK

Test valeur de la
vitesse cartésienne

OK

Triplets de couples $(P_i, Tx_j)$ compatibles

46

Stockage des triplets
de couples $(p_i, Tx_j)$

31

Triplets de
couples $(p_i, Tx_j)$

47

# Fig. 4

47

Triplets de
couples (P$_i$, Tx$_j$)

51

32

Formation d'un n-uplet
de couples (P$_i$, Tx$_j$)

52

n ≥ 3 et (P$_{réf}$, Tx$_{réf}$)
élément du n-uplet?

n-uplet de couples
(P$_i$, Tx$_i$) avec n ≥ 3

Compatibilité
des mesures
bistatiques?

53

n-uplet de couples
(P$_i$, Tx$_i$) compatibles

Stockage du n-uplet

Liste des plots
fusionnés

54

Nouveau couple
de référence
(P$_{réf}$, Tx$_{réf}$)

Gestion des
couples (P$_i$, Tx$_i$)

34

Actualisation liste
des plots
disponibles

33

"Paquets
de plots"

35

Fig. 5

74

24

Pistes cartésiennes
externes

Plots bistatiques
libres

72

Initialisation de pistes
cartésiennes fusionnées
autres pisteurs

Pistes cartésiennes
fusionnées externes

Rejet des Pistes
cartésiennes
fusionnées externes
non associées:

73

Association plots libres -
pistes cartésiennes
fusionnées externes

21 ou 61

Pistes cartésiennes
fusionnées externes
assimilées

Initialisation de pistes
cartésiennes Radar

Pistes cartésiennes
radar

75

Pistes fusionnées radar

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2933775
- WO 2009047546 A
- EP 2196821 A
- FR 0904144
- FR 2910131